# EUROPÄISCHE PATENTSCHRIFT

(11) **EP 2 127 317 B1**
(45) Veröffentlichungstag und Bekanntmachung des Hinweises auf die Patenterteilung: **27.12.2017**
(21) Anmeldenummer: 08708474.5
(22) Anmeldetag: 30.01.2008
(51) Int. Cl.: H04L 29/06, G06F 21/00, H04L 12/22, G06F 21/83

(54) **VERFAHREN, ANORDNUNG, SYSTEM UND SOFTWAREMITTEL ZUR SICHEREN DATENÜBERTRAGUNG**
METHOD, ARRANGEMENT, SYSTEM AND SOFTWARE MEANS FOR SECURE DATA TRANSMISSION
PROCÉDÉ, AGENCEMENT, SYSTÈME ET LOGICIEL POUR UN TRANSFERT DE DONNÉES FIABLE

(30) Priorität: 30.01.2007 DE 102007004631
(43) Veröffentlichungstag der Anmeldung: 02.12.2009
(73) Patentinhaber: Cherry GmbH, 91275 Auerbach/Opf (DE)
(72) Erfinder: BOETHE, Thomas, 92696 Flossenbürg (DE); PICKELMANN, Hans, 92259 Neukirchen (DE); KÜHNL, Jörg, 92729 Weiherhammer (DE)
(74) Vertreter: Aurigium Leischner & Luthe
(86) Internationale Anmeldenummer: PCT/EP2008/051159
(87) Internationale Veröffentlichungsnummer: WO 2008/092915

(56) Entgegenhaltungen:
- EP-A- 1 473 615
- US-A- 6 134 661

## Beschreibung

Die Erfindung bezieht sich auf Verfahren, Anordnung, System und Softwaremittel zur sicheren Datenübertragung zwischen einem mit einem Netzwerkrechner verbundenen Eingabegerät und einer Netzwerkgegenstelle, welche mit dem Netzwerkrechner über ein Datennetzwerk verbunden ist.

Heutzutage ist eine Vielzahl von Personal Computern und anderen Rechnern beispielsweise über Internet und/oder Firmennetzwerke mit anderen Rechnern vernetzt und tauschen über diese Netzwerke auch vertrauliche und sensible Daten aus. Dabei sind diese übertragenen Daten insbesondere in öffentlich zugänglichen Netzen - aber nicht nur in diesen - immer der Gefahr von Spionage, Manipulation und/oder sonstigem Missbrauch ausgesetzt. Ein besonders bekanntes Beispiel für den Missbrauch von Daten im Internet stellt dabei das Ausspionieren von Zugangsdaten beim Home-Banking dar. Hierbei werden beispielsweise die Authentifizierungs- und Transaktionsdaten eines das Home-Banking anwendenden Bankkunden durch eingeschleuste Spionagesoftware ausgespäht und zum Schaden des Bankkunden missbraucht.

Derzeit authentifiziert sich ein Benutzer beim Zugang zu einem geschützten Bereich, beispielsweise in den Kontenbereich des Web-Servers einer Bank beim Home-Banking üblicherweise durch Eingabe von Authentifizierungsdaten wie Benutzerkennzeichen, Passwort, Kontendaten, PIN (Persönliche Identifikationsnummer) und/oder TAN (Transaktionsnummer) über eine Computertastatur.

Zur Erhöhung der Authentifizierungssicherheit schlägt der Stand der Technik die Verwendung von Authentifizierungsgeräten, wie Kartenterminals, insbesondere für Chipkarten (Speicherchipkarten, Prozessorchipkarten), RFID-Lesegeräten (Lesegerät für Radio Frequency Identification Tags oder Transponder), biometrischen Lesegeräten (insbesondere Iris- oder Fingerlinienbildscanner, statische oder dynamische Unterschrifterkennung, Tippverhaltenerkennung auf Tastaturen ("keystroke dynamics analysis")), OCR- (= "Optical Character Recognition") Lesegeräten (Geräte zur optischen Zeichenerkennung), Barcode-Lesegeräte oder Magnetstreifenkarten-Lesegeräte vor, wodurch sich der Bankkunde nach einem im Vergleich zur derzeit weitverbreiteten Authentifizierung durch Dateneingabe über eine Computertastatur weitaus sichereren Verfahren authentifiziert. Solche Zusatzgeräte zur Authentifizierung wie die vorgenannten werden häufig als sog. USB-Devices an der USB-Schnittstelle (Universal Serial Bus) des Computers eines Bankkunden betrieben. Nach dem Stand der Technik wird diese Authentifizierungs-, wie auch weitere sensible Information vorzugsweise über eine abgesicherte Internetverbindung beispielsweise nach dem SSL- (Secure Socket Layer) oder TSL- (Transport Security Layer) Verfahren an den Web-Server einer Bank übertragen.

Dabei ist jedoch zu beachten, dass - im Gegensatz zur abgesicherten InternetVerbindung zwischen den Netzwerkrechnern (beispielsweise dem Computer des Bankkunden und dem Web-Server der Bank) - der Datenstrom von der Tastatur, wie auch vom Authentifizierungsgerät zum Computer des Bankkunden transparent und ungeschützt verläuft, und beispielsweise durch eine manipulierte Treibersoftware oder einen sog. Trojaner abgegriffen und/oder manipuliert werden kann.

Anhand des Beispiels des Homebankings wird das derzeit gebräuchlichste Verfahren nach dem Stand der Technik näher beschrieben:
Ein Benutzer öffnet auf seinem PC (Personal Computer) seinen Internet-Browser und öffnet darin z.B. die sichere und vertrauenswürdige Seite seiner Bank auf dem Web-Server der Bank. Der Internet-Browser baut zum Web-Server der Bank eine sichere Verbindung über ein bekanntes Verschlüsselungsverfahren wie z.B. SSL oder TLS auf. Auf dem Monitor des Benutzers wird diese sichere Verbindung zwischen dem Internet-Browser und dem Web-Server der Bank beispielsweise über ein Symbol (z.B. Schloss-Symbol) Internet-Browser angezeigt. Der Benutzer wird nun von der Bankapplikation aufgefordert seine PIN und TAN und gegebenenfalls weiterer Authentifizierungsdaten zur Authentifizierung einzugeben.

Bei dem Verfahren nach dem Stand der Technik treten insbesondere zwei Problemfelder auf:
Ein Problem stellt die Verbindung zwischen Tastatur und PC dar. Zwar existiert bei oben genanntem Verfahren aus dem Stand der Technik eine (weitgehend) sichere Verbindung zwischen Web-Server der Bank und PC des Benutzers, jedoch nicht zwischen Tastatur und PC. Somit können über die Tastatur eingegebene Daten jederzeit beispielsweise mittels Phishing (Abhören von Daten durch unberechtigte Dritte) durch Trojaner oder andere Verfahren abgehört werden. Unter Trojanern sind schädliche Computerprogramme zu verstehen, die ohne Wissen des PC-Benutzers im Hintergrund laufen, um beispielsweise Tastatureingaben heimlich aufzuzeichnen und an Dritte zu übermitteln, um beispielsweise Passwörter, PIN's oder TAN's auszuspähen.

Ein weiteres Problem stellt das Kennzeichnen einer sicheren Verbindung zwischen Web-Server der Bank und PC des Benutzers beispielsweise mittels des Schloss-Symbols im Internet-Browser dar. Diese Kennzeichnung kann durch den PC-Benutzer leicht übersehen werden oder dem PC-Benutzer ist überhaupt nicht bewusst, wie eine sichere Verbindung zwischen Web-Server und PC gekennzeichnet ist und welchen Gefahren er sich bei einer ungesicherten Internetverbindung aussetzt. Somit fällt dem PC-Benutzer gar nicht auf, wenn überhaupt keine sichere Verbindung vorhanden ist oder der PC-Benutzer seine Daten beispielsweise auf einer gefälschten Internetseite eingibt. US6134661 offenbart ein Verfahren zur Generierung eines sicheren Passworts (eine Kombination von Zahlen und Groß- und Kleinbuchstaben) aus einem leicht einprägbaren, unsicheren Passwort, mittels einem eine Verschlüsselungseinrichtung umfassenden Eingabegerät.

Es ist daher die Aufgabe der vorliegenden Erfindung, die vorstehend am Beispiel des Home-Banking exemplarisch aufgezeigten Sicherheitslücken zu beseitigen und die Sicherheit von gespeicherten, bearbeiteten und/oder übertragenen Daten, insbesondere von Daten bei Übertragung in Datennetzwerken im Allgemeinen und Authentifizierungsdaten in Speziellen zu erhöhen. Dazu soll im Besonderen der Schutz von zwischen einem mit einem Netzwerkrechner verbundenen Eingabegerät und einer Netzwerkgegenstelle, welche mit dem Netzwerkrechner über ein Datennetzwerk verbunden ist, zu übertragenden Daten verbessert werden, wobei es sich bei Netzwerkrechner und Netzwerkgegenstelle beispielsweise um einen netzwerkfähigen Rechner, Server, Desktop-PC, Notebook, Thin-Client, aber auch ein zur Einwahl in ein Netzwerk (beispielsweise Internet, WAP, WLAN) fähiges PDA oder Smartphone oder jede andere netzwerkfähige Komponente mit Recheneinheit handeln kann. Das Eingabegerät kann dabei eine konventionelle Tastatur (über die die Authentifizierung vorgenommen werden kann), oder aber ein spezielles Authentifizierungsgerät, insbesondere ein Kartenterminal, vorzugsweise für Chipkarten (Speicherchipkarten, Prozessorchipkarten), RFID-Lesegerät (Lesegerät für Radio Frequency Identification Tags oder Transponder), biometrisches Lesegerät (insbesondere Iris- oder Fingerlinienbildscanner, statische oder dynamische Unterschrifterkennung, Tippverhaltenerkennung auf Tastaturen ("keystroke dynamics analysis")), OCR-Lesegerät (= "Optical Character Recognition"), Barcode-Lesegerät, Magnetstreifenkarten-Lesegerät oder auch eine Tastatur, ein numerisches Keypad oder ein graphisches Eingabesystem (wie beispielsweise Digitizer (Digitalisierbrett), Maus, Touchpad oder Touchscreen) aufweisen.

Hinsichtlich des Verfahrens wird diese Aufgabe erfindungsgemäß gelöst durch ein Verfahren nach Anspruch 1. Im Hinblick auf das System wird diese Aufgabe erfindungsgemäß gelöst durch ein System nach Anspruch 14. Durch Verfahren und System gemäß der vorliegenden Erfindung lassen sich dabei eine Reihe von Vorteilen erzielen:
So lässt sich die Erfindung für die verschiedensten Geräteschnittstellen und Netzwerkprotokolle implementieren, so dass eine Anpassung an eine Vielzahl von Anwendungsumgebungen und Einsatzgebiete möglich ist. Auf diese Weise lassen sich beispielsweise auch kostengünstige und weit verbreitete Geräteschnittstellen wie die USB-Schnittstelle für die Übertragung sensibler und/oder vertraulicher Daten nutzen, obwohl eine solche Schnittstelle per se keinen geschützten Datentransfer ermöglicht. Hierdurch ist es nicht erforderlich, teurere und aufwendigere Geräte beispielsweise für eine Netzwerkschnittstelle zu entwickeln und herzustellen.

Weiterhin vorteilhaft ist, dass durch die Erfindung eine hohe Ressourceneffizienz und eine geringe Belastung des Prozessors (CPU) des Netzwerkrechners erzielt werden kann. Gleichzeitig ist es möglich, ein sehr hohes Sicherheitsniveau zu gewährleisten, weil der Netzwerkrechner als Hauptobjekt für einen potentiellen Angriff ausgeschaltet werden kann, indem ausschließlich verschlüsselte Daten, die somit vor Ausspionieren und Manipulation weitgehend sicher sind, durch diesen Rechner durchgeschleust werden. Die Verschlüsselungseinrichtung befindet sich im Eingabegerät und kann als Hardwarelösung ausgeführt sein oder als Software zum Einsatz in einer speziellen, weitgehend vor Angriffen sicheren Betriebssystemumgebung entwickelt werden, wodurch diese Verschlüsselungseinrichtung weitgehend immun gegenüber im Umlauf befindlichen Viren, Spyware, Trojanern, Würmern, Backdoors und sonstiger Malware ist und aufgrund der Hardwarelösung oder des spezialisierten Betriebssystems kaum Angriffsmöglichkeiten für die Programmierung von entsprechender Malware bietet.

Weiterhin erlaubt die Implementationsmöglichkeit beispielsweise bei Geräten mit der kostengünstigen, aber per se keine geschützte Verbindung ermöglichenden USB-Schnittstelle eine gute Integration in bestehende Hardwareumgebungen. Dabei kann beispielsweise ein Authentifizierungsgerät an einer Computertastatur mit USB-HubFunktion, gegebenenfalls neben anderen USB-Geräten betrieben werden, wodurch sich u.U. eine günstigere Verkabelung der Geräte erzielen lässt und keine zusätzliche Schnittstelle am Netzwerkrechner zur Verfügung gestellt zu werden braucht.

Ebenfalls ist es denkbar - falls gewünscht - das Eingabegerät mit weiteren USB-Schnittstellen auszustatten oder als USB-Hub auszuführen, wobei an diesen Schnittstellen angeschlossene weitere USB-Geräte unverschlüsselt oder unter Nutzung der Verschlüsselungseinrichtung des Eingabegeräts mit dem Netzwerkrechner kommunizieren können. Hierdurch könnte - mit geringem Implementierungsaufwand - beispielsweise eine an das Eingabegerät angeschlossene Tastatur zur sicheren Eingabe vertraulicher oder sensibler Information wie beispielsweise von Legitimierungs-, Authentifizierungs- und/oder Transaktionsdaten genutzt werden. Auch lässt sich die USB-Schnittstelle zur Bereitstellung einer Vielzahl von Gerätefunktionen nutzen.

Ebenfalls ist es im Rahmen der Erfindung problemlos möglich, eine Ausführungsform zu realisieren, bei der eine Tastatur einmal als Eingabegerät in konventioneller Weise zur Eingabe unverschlüsselter Daten verwendet werden kann, aber als sicheres Eingabegerät (beispielsweise automatisch bei Anwählen einer https- ("Hypertext Transfer Protocol Secure") Internetseite oder bei Übertragung sicherheitsrelevanter oder sensibler Daten beispielsweise aus bestimmten Anwendungen oder durch Benutzerwahl) geschaltet werden kann, wobei in diesem Fall die unverschlüsselten und verschlüsselten Daten über verschiedene logische Kanäle ein und derselben physikalischen Schnittstelle übertragen werden könnten.

Des weiteren ist es im Rahmen der Erfindung denkbar, bestimmte Ausführungsformen der Erfindung zu realisieren, die bei Verwendung einer Tastatur zur Eingabe sensibler Daten nur die Daten eines oder eines Teiles der Eingabebereiche der Tastatur (z.B. des numerischen Eingabebereiches (NumPad)) verschlüsseln, wobei die übrigen Bereiche der Tastatur in konventioneller Weise zur unverschlüsselten Eingabe von Daten für andere Applikationen, Anwendungsprogramme, oder andere Fenster des Internet-Browsers genutzt werden können.

Überdies ist es im Rahmen der Erfindung problemlos möglich, bestimmte Ausführungsformen der Erfindung zu realisieren, die die spezifische Hardware zur Dateneingabe und/oder spezifische Authentifizierungsgeräte dergestalt weiterentwickeln, dass das Vorliegen einer sicheren Verbindung zwischen Netzwerkgegenstelle und Netzwerkrechner einerseits und zwischen Netzwerkrechner und Eingabe- und/oder Authentifizierungsgerät besonders durch eine Signalisierungseinrichtung (beispielsweise Blinken einer Leuchteinrichtung, beispielsweise einer LED (Leuchtdiode) an Eingabe- und/oder Authentifizierungsgerät) anzuzeigen und so den Benutzer des Netzwerkrechners bezüglich der Sicherheit der über das Netzwerk übertragenen sensiblen Daten zu sensibilisieren und ihm das Vorliegen einer vollständig geschützten Verbindung eindeutig und unübersehbar anzuzeigen.

Als weiterer Vorzug kann auch eine Datenübertragung über Wireless LAN (WLAN) genutzt werden, da sich durch die vorliegende Erfindung die Sicherheit der Datenübertragung auch im Netzwerk bedeutend erhöhen lässt und somit Bedenken gegenüber der Nutzung von WLAN zur Übermittlung sensibler oder vertraulicher Daten in den meisten Anwendungsfällen entfallen.

In einer bevorzugten Ausführungsform des erfindungsgemäßen Verfahrens kann das Eingabegerät eine Tastatur mit einer Mehrzahl von Eingabebereichen aufweisen, wobei nur die Daten eines oder eines Teiles der Eingabebereiche durch die Verschlüsselungseinrichtung des Eingabegerätes verschlüsselbar sind. Hierdurch ist es in vorteilhafter Weise möglich, lediglich die Daten, welche in einem bestimmten Teil der Tastatur (z.B. über Zifferntasten) eingegeben werden (beispielsweise Benutzerkennzeichen, Konten- und/oder Kreditkartendaten, Passwort, PIN (Persönliche Identifikationsnummer) und/oder TAN (Transaktionsnummer)), zu verschlüsseln, während der übrige Teil der Tastatur beispielsweise in anderen Applikationen zur Eingabe wie üblich weitergenutzt werden kann. Dabei können diese Eingabebereiche Bereiche eines einheitlichen Eingabefeldes umfassen (z.B. Ziffernreihe eines alphanumerischen Eingabefeldes), temporäre Aktivierung einer Sonderbelegung von Tasten (z.B. Aktivierung der numerischen Belegung beispielsweise von Buchstabentasten einer Notebook- oder einer Kompakttastatur) oder die Nutzung des separaten Ziffernblocks (NumPad) einer konventionellen Computertastatur oder einer numerischen Zusatztastatur. Durch die eine Tastatur nach dieser Ausführungsform der Erfindung ist es möglich, dass von der Eingabe der Daten in die Tastatur bis zum Entschlüsseln der Daten auf dem Web-Server eine durchgehend sichere Verbindung bereitgestellt wird, so dass die Daten weder zwischen Netzwerkrechner und Netzwerkgegenstelle, noch zwischen Tastatur und Netzwerkrechner von unberechtigten Dritten abgehört werden können. Auch ein Angriff mittels Schadsoftware (Viren, Spyware, Trojanern, Würmern, Backdoors und sonstiger Malware) auf den Netzwerkrechner kann somit die Sicherheit der übertragenen Daten nicht gefährden.

In einer weiteren bevorzugten Ausführungsform des erfindungsgemäßen Verfahrens kann einer der Eingabebereiche einen alphanumerischen Eingabebereich und ein anderer der Eingabebereiche einen numerischen Eingabebereich aufweisen, wobei vorzugsweise nur die Daten des numerischen Eingabebereichs verschlüsselbar sind. Eine solche Ausführung stellt eine besonders zweckmäßige Ausführungsform der zuvor genannten Variante dar.

In einer weiteren bevorzugten Ausführungsform des erfindungsgemäßen Verfahrens kann die Verschlüsselung der Daten durch die Verschlüsselungseinrichtung aktivierbar und deaktivierbar sein. Eine solche Ausführungsform kann vorteilhaft sein, da hierbei die Verschlüsselung nur dann aktiv ist, wenn eine sichere Verbindung zu einem vertrauenswürdigen Web-Server besteht und vertrauliche und/oder sensible Daten verschlüsselt übertragen werden sollen.

In einer weiteren bevorzugten Ausführungsform des erfindungsgemäßen Verfahrens kann das Eingabegerät, vorzugsweise die Tastatur eine Signalisierungseinrichtung, vorzugsweise eine Leuchteinrichtung, zur Signalisierung einer sicheren Verbindung zwischen Netzwerkgegenstelle und Netzwerkrechner und zwischen Netzwerkrechner und Eingabegerät und/oder der Aktivierung der Verschlüsselungseinrichtung aufweisen. Diese Ausführungsform löst das bereits weiter oben diskutierte Problem des Standes der Technik, dass die Kennzeichnung (beispielsweise mittels des "Schloss-Symbols" im Internet-Browser) einer sicheren Verbindung durch den PC-Benutzer leicht übersehen werden kann oder dem PC-Benutzer überhaupt nicht bewusst ist, wie eine sichere Verbindung zwischen Web-Server und PC gekennzeichnet ist und welchen Gefahren er sich bei einer ungesicherten Internetverbindung aussetzt. Durch die Signalisierungseinrichtung nach dieser Ausführungsform der Erfindung wird dem Benutzer die Herstellung einer sicheren Verbindung zwischen Tastatur, Netzwerkrechner und Netzwerkgegenstelle klar und unübersehbar angezeigt und so signalisiert, dass er seine Daten sicher an einen Web-Server übermitteln kann; eine Eingabe von Daten beispielsweise bei unsicheren Internetverbindungen oder auf gefälschten Internet-Seiten wird somit wirksam verhindert.

In einer weiteren bevorzugten Ausführungsform des erfindungsgemäßen Verfahrens kann das Verfahren zumindest einen Authentifikationsschritt, vorzugsweise zur Authentifizierung der Netzwerkgegenstelle, beinhalten. Durch einen solchen Authentifikationsschritt können die über das Netzwerk verbundenen Rechner authetifiziert werden und somit der Datenaustausch mit einem anderen als dem berechtigten Adressaten verhindert werden.

In einer weiteren bevorzugten Ausführungsform des erfindungsgemäßen Verfahrens kann zumindest ein Authentifikationsschritt die Authentifizierung eines digitalen Zertifikates beinhalten. Hierdurch kann auf einfache Weise eine wirksame Authentifizierung ohne zusätzlichen Hardwareaufwand sichergestellt werden.

In einer weiteren bevorzugten Ausführungsform des erfindungsgemäßen Verfahrens kann zumindest ein Authentifikationsschritt durch eine Authentifizierungseinrichtung des Eingabegerätes, vorzugsweise der Tastatur, durchgeführt werden. Durch eine solche Implementierung der Authentifizierungseinrichtung im Eingabegerät (und damit eine Verlagerung der Authentifizierungseinrichtung vom beispielsweise durch Schadsoftware angreifbaren Netzwerkrechner weg) kann ein sehr hohes Maß an Sicherheit erreicht werden. Der Netzwerkrechner stellt somit keine sicherheitsrelevante Komponente mehr dar, da Authetifizierungs- und Verschlüsselungsschritte bereits im Eingabegerät erfolgen. In einer weiteren bevorzugten Ausführungsform des erfindungsgemäßen Verfahrens kann die Authentifizierung einen Vergleich eines von der Netzwerkgegenstelle empfangenen digitalen Zertifikats mit zumindest einem in dem Eingabegerät, vorzugsweise Tastatur hinterlegten digitalen Zertifikat, vorzugsweise Wurzel-Zertifikat, beinhalten. Dies stellt eine besonders sinnvolle und praktikable Variante der Authentifizierung im Eingabegerät dar. Bei Verwendung von Wurzel-Zertifikaten müssen dem Eingabegerät die individuellen digitalen Zertifikate der Web-Server nicht bekannt sein, da diese von Wurzel-Zertifikaten von einer überschaubaren Anzahl bekannter sogenannter Trust Centern abgeleitet werden können. Es müssen dem Eingabegerät daher nur die häufigsten Wurzel-Zertifikate bekannt sein, um so zu überprüfen, ob ein digitales Zertifikat eines Web-Servers vertrauenswürdig ist (sofern dieses von einem dieser bekannten Wurzel-Zertifikate abgeleitet ist).

In einer weiteren bevorzugten Ausführungsform des erfindungsgemäßen Verfahrens kann nach Herstellen einer sicheren Verbindung zwischen Netzwerkgegenstelle und Netzwerkrechner und Authentifizierung der Netzwerkgegenstelle die Verschlüsselungseinrichtung aktivierbar sein. Bei dieser Ausführungsform ist die Verschlüsselungseinrichtung des Eingabegerätes nur dann aktiviert, wenn eine sichere Verbindung zwischen Netzwerkgegenstelle und Netzwerkrechner besteht und die Authentifizierung der Netzwerkgegenstelle vorzugsweise durch eine im Eingabegerät implementierte Authentifizierungseinrichtung erfolgreich durchgeführt wurde und somit die Sicherheit der Datenkommunikation gewährleistet ist. In allen anderen Fällen, in denen eine Aktivierung der Verschlüsselungseinrichtung des Eingabegerätes überflüssig wäre, arbeitet das Eingabegerät in herkömmlicher Weise ohne Verschlüsselungseinrichtung und kann somit uneingeschränkt in allen anderen Applikationen genutzt werden.

In einer bevorzugten Ausführungsform des erfindungsgemäßen Verfahrens kann das Verfahren ein Authentifikationsverfahren sein. Bei einem Authentifikationsverfahren kommen die Vorteile der Erfindung besonders stark zum Tragen, da hierbei Manipulation und Ausspionieren der Authentifikationsdaten, welche hier besonders kritisch sind, überaus wirkungsvoll und zuverlässig verhindert werden kann.

In einer weiteren bevorzugten Ausführungsform des erfindungsgemäßen Verfahrens kann das Verfahren ein Verfahren zur Verschlüsselung von Daten auf dem Netzwerkrechner und/oder auf der Netzwerkgegenstelle aufweisen. Bei einem Verschlüsselungsverfahren kann beispielsweise ein auf einer Chipkarte (oder einem anderen Sicherheitsdatenträger, wie Magnetstreifen, Barcode (Strichcode) oder RFID (Radio Frequency Identification Transponder)) gespeicherter Sicherheits-Code und gegebenenfalls auch Verschlüsselungsverfahren zur Verschlüsselung und Sicherung der Daten zur Anwendung kommen und hierdurch ein besonders hohes Maß an Sicherheit (höher als bei Verwendung normaler Passwörter) erzielt werden, wobei gleichzeitig die Nutzung für den Anwender erleichtert und vereinfacht werden kann.

In einer weiteren bevorzugten Ausführungsform des erfindungsgemäßen Verfahrens kann das Eingabegerät ein Authentifizierungsgerät, insbesondere ein Kartenterminal, insbesondere für Chipkarten (Speicherchipkarten, Prozessorchipkarten), und/oder RFID-Lesegerät (Lesegerät für Radio Frequency Identification Tags oder Transponder), und/oder biometrisches Lesegerät und/oder OCR-Lesegerät und/oder Barcode-Lesegerät und/oder Magnetstreifenkarten-Lesegerät und/oder eine Tastatur aufweisen. Durch den Einsatz eines Gerätes, wie eines der oben genannten, kann ein besonders zuverlässiges, effizientes und kaum zu überlistendes Authentifizierungsverfahren bereitgestellt werden.

Anstatt oder zusätzlich zu einer Tastatur kann auch ein numerisches Keypad oder beispielsweise ein graphisches Eingabesystem (wie Digitizer, Maus, Touchpad oder Touchscreen) zum Einsatz kommen.

In einer weiteren bevorzugten Ausführungsform des erfindungsgemäßen Verfahrens kann die Umsetzungseinrichtung des Netzwerkrechners einen Protokollumsetzer, vorzugsweise eine Translating Proxy aufweisen. Durch eine solche Umsetzungseinrichtung kann der Datentransfer über den Netzwerkrechner besonders ressourceschonend, effizient und manipulationssicher und ohne Mehrfachverschlüsselung gestaltet werden.

In einer weiteren bevorzugten Ausführungsform des erfindungsgemäßen Verfahrens kann die Umsetzungseinrichtung des Netzwerkrechners ein Softwaremittel aufweisen, durch welche die vom Eingabegerät vorzugsweise über eine USB-Schnittstelle übermittelten Daten in ein Netzwerkprotokoll, vorzugsweise in ein TCP/IP-Protokoll umsetzbar sind. Durch eine solche Umsetzungseinrichtung kann eine effiziente, direkte Umsetzung der über die USB-Schnittstelle angelieferten und beispielsweise über Ethernet weiterversandten Daten vorgenommen werden.

In einer weiteren bevorzugten Ausführungsform des erfindungsgemäßen Verfahrens kann die Umsetzungseinrichtung des Netzwerkrechners einen Gerätetreiber vorzugsweise mit einer Middleware aufweisen. Durch einen Gerätetreiber kann die Schnittstelle direkt angesprochen werden, wobei eine Middleware zusätzlich den Vorteil der Reduzierung der Komplexität und der besseren Vermittlung zwischen den Softwaremodulen und leichtere Einbindung in Systemumgebungen ermöglicht.

In einer weiteren bevorzugten Ausführungsform des erfindungsgemäßen Verfahrens kann die Umsetzungseinrichtung des Netzwerkrechners eine Verschlüsselungseinrichtung vorzugsweise nach dem "Transport Layer Security"- (TLS) und/oder "Secure Sockets Layer"- (SSL) Verfahren aufweisen. Durch diese Verschlüsselungsverfahren lässt sich ein hohes Maß an Sicherheit bei der Übertragung der Daten im Datennetzwerk erzielen, wobei die Daten "peer-to-peer" zwischen Eingabegerät und der (Remote) Netzwerkgegenstelle geschützt werden können. Dabei weisen diese beiden Verfahren eine weite Verbreitung auf und werden bereits auf den meisten Netzwerkrechnern vorgehalten, so dass das erfindungsgemäße Verfahren mit der heutigen Infrastruktur kompatibel ist und bereits problemlos und ohne Nachrüstung in bestehenden Systemen angewendet werden kann.

In einer weiteren bevorzugten Ausführungsform des erfindungsgemäßen Verfahrens kann das Datennetzwerk ein Ethernet, vorzugsweise ein TCP/IP-basiertes Ethernet sein. Ein solches insbesondere TCP/IP-basiertes Ethernet hat eine große Verbreitung und eignet sich auch technisch besonders für den Aufbau eines solchen Rechnernetzes.

In einer weiteren bevorzugten Ausführungsform des erfindungsgemäßen Verfahrens kann das Datennetzwerk ein Intranet und/oder Internet, insbesondere ein Internet sein. Derartige Netze sind bereits an den meisten Orten vorhanden, wobei zur unternehmensinternen Kommunikation die Infrastruktur des Intranets vorzuziehen ist. Für Angebote, die sich an Endkunden richten und einer großen Bevölkerungsgruppe zugänglich sein sollen, wie Homebanking, eCommerce, eBusiness, eContracting, eGovernment bietet sich hingegen insbesondere das Internet als Kommunikationsnetz an.

In einer weiteren bevorzugten Ausführungsform des erfindungsgemäßen Verfahrens kann das Datennetzwerk ein LAN und/oder WLAN und/oder WAN sein. Innerhalb von Firmen besteht zumeist eine LAN- oder WAN-Infrastruktur, die mit dem erfindungsgemäßen Verfahren vorteilhaft genutzt werden kann. Dabei hat sich bislang oft der Einsatz des weitaus flexibleren WLANs aus Sicherheitsgründen verboten. Durch den Einsatz des erfindungsgemäßen Verfahrens kann mit äußerst geringen Investitionen auf die bestehende Infrastruktur zurückgegriffen werden oder auf WLAN umgestellt werden, selbst in solchen Bereichen, wo bislang beispielsweise eine spezielle teure Hardware mit abhörsicherer Verkabelung eingesetzt wurde.

In einer weiteren bevorzugten Ausführungsform des erfindungsgemäßen Verfahrens kann die Datenübertragung zwischen dem Eingabegerät und der Netzwerkgegenstelle bidirektional sein. Hierdurch lassen sich beispielsweise "Handshake"-Protokoll umsetzen, Verschlüsselungs- und Übertragungsparameter austauschen, die Integrität der kommunizierenden "peers" verifizieren und/oder allgemein Rückmeldungen an das Eingabegerät übermitteln.

In einer weiteren bevorzugten Ausführungsform des erfindungsgemäßen Verfahrens kann die Verschlüsselungseinrichtung des Eingabegerätes eine Ver- und Entschlüsselungseinrichtung und die Entschlüsselungseinrichtung der Netzwerkgegenstelle eine Ver- und Entschlüsselungseinrichtung sein. Hierdurch wird bei bidirektionalem Betrieb eine Datenverschlüsselung in beiden Übertragungsrichtungen ermöglicht, wodurch sich die Datensicherheit erhöht.

In einer weiteren bevorzugten Ausführungsform des erfindungsgemäßen Verfahrens kann die Datenübertragung von der Netzwerkgegenstelle zum Eingabegerät zumindest die folgenden Schritte aufweisen:
- Verschlüsseln der Daten der Netzwerkgegenstelle durch die Ver- und Entschlüsselungseinrichtung der Netzwerkgegenstelle;
- Übertragung der verschlüsselten Daten auf den Netzwerkrechner;
- Umsetzen der verschlüsselten Daten aus dem Netzwerkprotokoll in ein mit der Schnittstelle des Eingabegerätes konformes Format durch die Umsetzungseinrichtung des Netzwerkrechners;
- Übermitteln der verschlüsselten Daten an das Eingabegerät;
- Entschlüsseln der Daten durch die Ver- und Entschlüsselungseinrichtung des Eingabegerätes.

Diese Abfolge von Schritten ermöglicht eine besonders zweckmäßige und sichere Kommunikation in "Rückrichtung", von der Netzwerkgegenstelle zum Eingabegerät.

In einer weiteren bevorzugten Ausführungsform des erfindungsgemäßen Verfahrens kann zumindest eine vorzugsweise beide der Ver- und/oder Entschlüsselungseinrichtungen durch zumindest eine der Einrichtungen aus Lese- und/oder Eingabeeinrichtung, Netzwerkrechner, Netzwerkgegenstelle steuerbar sein. Durch eine solche Steuerung ist es beispielsweise möglich, die Verschlüsselungsparameter auszuhandeln, wodurch eine höhere Sicherheit bei der Kommunikation erzielt werden oder eine Anpassung zwischen verschiedenen Verschlüsselungsstandards vorgenommen werden kann, wodurch sich beispielsweise die Kompatibilität erhöhen und die Weiterentwicklung der Standards besser vornehmen lässt.

In einer weiteren bevorzugten Ausführungsform des erfindungsgemäßen Verfahrens kann die Schnittstelle des Eingabegerätes eine serielle Schnittstelle, vorzugsweise eine USB- und/oder Firewire-Schnittstelle aufweisen. Eine serielle Schnittstelle lässt sich heutzutage besonders einfach und kostengünstig realisieren und kommt mit einfachen und zuverlässigen Verbindungssteckern und dünnen, flexiblen Kabeln aus, was sie besonders für den Betrieb externer Computergeräte, wie beispielsweise des erfindungsgemäßen Eingabegerätes geeignet macht. Als Schnittstelle haben sich dabei insbesondere USB und Firewire bewährt und im Personal Computerbereich eine große Verbreitung gefunden. Daher stellen diese Schnittstellen zum Zeitpunkt dieser Anmeldung eine besonders geeignete Hardwarelösung für die Anbindung des Eingabegeräts an den Netzwerkrechner dar. Zudem ermöglichen die beiden vorgenannten Schnittstellen die flexible Anbindung und Verzweigung weiterer Hardware an den Rechner.

In einer weiteren bevorzugten Ausführungsform der erfindungsgemäßen Anordnung kann das Eingabegerät eine Tastatur mit einer Mehrzahl von Eingabebereichen aufweisen, wobei nur die Daten eines oder eines Teiles der Eingabebereiche durch die Verschlüsselungseinrichtung des Eingabegerätes verschlüsselbar sind. Hierdurch ist es in vorteilhafter Weise möglich, lediglich die Daten, welche in einem bestimmten Teil der Tastatur (z.B. über Zifferntasten) eingegeben werden (beispielsweise Benutzerkennzeichen, Konten- und/oder Kreditkartendaten, Passwort, PIN (Persönliche Identifikationsnummer) und/oder TAN (Transaktionsnummer)), zu verschlüsseln, während der übrige Teil der Tastatur beispielsweise in anderen Applikationen zur Eingabe wie üblich weitergenutzt werden kann. Dabei können diese Eingabebereiche Bereiche eines einheitlichen Eingabefeldes umfassen (z.B. Ziffernreihe eines alphanumerischen Eingabefeldes), temporäre Aktivierung einer Sonderbelegung von Tasten (z.B. Aktivierung der numerischen Belegung beispielsweise von Buchstabentasten einer Notebook- oder einer Kompakttastatur) oder die Nutzung des separaten Ziffernblocks (NumPad) einer konventionellen Computertastatur oder einer numerischen Zusatztastatur. Durch die eine Tastatur nach dieser Ausführungsform der Erfindung ist es möglich, dass von der Eingabe der Daten in die Tastatur bis zum Entschlüsseln der Daten auf dem Web-Server eine durchgehend sichere Verbindung bereitgestellt wird, so dass die Daten weder zwischen Netzwerkrechner und Netzwerkgegenstelle, noch zwischen Tastatur und Netzwerkrechner von unberechtigten Dritten abgehört werden können. Auch ein Angriff mittels Schadsoftware (Viren, Spyware, Trojanern, Würmern, Backdoors und sonstiger Malware) auf den Netzwerkrechner kann somit die Sicherheit der übertragenen Daten nicht gefährden.

In einer weiteren bevorzugten Ausführungsform der erfindungsgemäßen Anordnung kann einer der Eingabebereiche einen alphanumerischen Eingabebereich und ein anderer der Eingabebereiche einen numerischen Eingabebereich aufweisen, wobei vorzugsweise nur die Daten des numerischen Eingabebereichs verschlüsselbar sind. Eine solche Ausführung stellt eine besonders zweckmäßige Ausführungsform der zuvor genannten Variante dar.

In einer weiteren bevorzugten Ausführungsform der erfindungsgemäßen Anordnung kann die Verschlüsselung der Daten durch die Verschlüsselungseinrichtung aktivierbar und deaktivierbar sein. Eine solche Ausführungsform kann vorteilhaft sein, da hierbei die Verschlüsselung nur dann aktiv ist, wenn eine sichere Verbindung zu einem vertrauenswürdigen Web-Server besteht und vertrauliche und/oder sensible Daten verschlüsselt übertragen werden sollen.

In einer weiteren bevorzugten Ausführungsform der erfindungsgemäßen Anordnung kann das Eingabegerät, vorzugsweise die Tastatur eine Signalisierungseinrichtung, vorzugsweise eine Leuchteinrichtung, zur Signalisierung einer sicheren Verbindung zwischen Netzwerkgegenstelle und Netzwerkrechner und zwischen Netzwerkrechner und Eingabegerät und/oder der Aktivierung der Verschlüsselungseinrichtung aufweisen. Diese Ausführungsform löst das bereits weiter oben diskutierte Problem des Standes der Technik, dass die Kennzeichnung (beispielsweise mittels des "Schloss-Symbols" im Internet-Browser) einer sicheren Verbindung durch den PC-Benutzer leicht übersehen werden kann oder dem PC-Benutzer überhaupt nicht bewusst ist, wie eine sichere Verbindung zwischen Web-Server und PC gekennzeichnet ist und welchen Gefahren er sich bei einer ungesicherten Internetverbindung aussetzt. Durch die Signalisierungseinrichtung nach dieser Ausführungsform der Erfindung wird dem Benutzer die Herstellung einer sicheren Verbindung zwischen Tastatur, Netzwerkrechner und Netzwerkgegenstelle klar und unübersehbar angezeigt und so signalisiert, dass er seine Daten sicher an einen Web-Server übermitteln kann; eine Eingabe von Daten beispielsweise bei unsicheren Internetverbindungen oder auf gefälschten Internet-Seiten wird somit wirksam verhindert.

In einer weiteren bevorzugten Ausführungsform der erfindungsgemäßen Anordnung kann das Eingabegerät eine Authentifizierungseinrichtung, vorzugsweise zur Authentifizierung der Netzwerkgegenstelle mittels eines digitalen Zertifikates, aufweisen. Durch eine solche Implementierung der Authentifizierungseinrichtung im Eingabegerät (und damit eine Verlagerung der Authentifizierungseinrichtung vom beispielsweise durch Schadsoftware angreifbaren Netzwerkrechner weg) kann ein sehr hohes Maß an Sicherheit erreicht werden. Der Netzwerkrechner stellt somit keine sicherheitsrelevante Komponente mehr dar, da Authetifizierungs- und Verschlüsselungsschritte bereits im Eingabegerät erfolgen.

In einer weiteren bevorzugten Ausführungsform der erfindungsgemäßen Anordnung kann das Eingabegerät, vorzugsweise Tastatur, einen Speicher zur Hinterlegung zumindest eines digitalen Zertifikats, vorzugsweise Wurzel-Zertifikats aufweisen und die Authentifizierung einen Vergleich eines von der Netzwerkgegenstelle empfangenen digitalen Zertifikats mit zumindest einem in dem Speicher hinterlegten digitalen Zertifikat beinhalten. Dies stellt eine besonders sinnvolle und praktikable Variante der Authentifizierung im Eingabegerät dar. Bei Verwendung von Wurzel-Zertifikaten müssen dem Eingabegerät die individuellen digitalen Zertifikate der Web-Server nicht bekannt sein, da diese von Wurzel-Zertifikaten von einer überschaubaren Anzahl bekannter sogenannter Trust Centern abgeleitet werden können. Es müssen dem Eingabegerät daher nur die häufigsten Wurzel-Zertifikate bekannt sein, um so zu überprüfen, ob ein digitales Zertifikat eines Web-Servers vertrauenswürdig ist (sofern dieses von einem dieser bekannten Wurzel-Zertifikate abgeleitet ist). Ferner besteht die Möglichkeit, weitere, beispielsweise neuere Wurzel-Zertifikate über eine sichere Verbindung von einer vertrauenswürdigen Internet-Seite in den Speicher der Tastatur nachzuladen.

In einer weiteren bevorzugten Ausführungsform der erfindungsgemäßen Anordnung kann nach Herstellen einer sicheren Verbindung zwischen Netzwerkgegenstelle und Netzwerkrechner und Authentifizierung der Netzwerkgegenstelle die Verschlüsselungseinrichtung aktivierbar sein. Bei dieser Ausführungsform ist die Verschlüsselungseinrichtung des Eingabegerätes nur dann aktiviert, wenn eine sichere Verbindung zwischen Netzwerkgegenstelle und Netzwerkrechner besteht und die Authentifizierung der Netzwerkgegenstelle vorzugsweise durch eine im Eingabegerät implementierte Authentifizierungseinrichtung erfolgreich durchgeführt wurde und somit die Sicherheit der Datenkommunikation gewährleistet ist. In allen anderen Fällen, in denen eine Aktivierung der Verschlüsselungseinrichtung des Eingabegerätes überflüssig wäre, arbeitet das Eingabegerät in herkömmlicher Weise ohne Verschlüsselungseinrichtung und kann somit uneingeschränkt in allen anderen Applikationen genutzt werden.

In einer weiteren bevorzugten Ausführungsform der erfindungsgemäßen Anordnung kann das Eingabegerät ein Authentifikationsgerät aufweisen. Die Vorteile der Erfindung lassen sich besonders vorteilhaft beim Einsatz mit einem Authentifikationsgerät nutzen, da hierbei Manipulation und Ausspionieren der Authentifikationsdaten, welche hier besonders kritisch sind, überaus wirkungsvoll und zuverlässig verhindert werden kann.

In einer weiteren bevorzugten Ausführungsform der erfindungsgemäßen Anordnung kann das Eingabegerät ein Gerät zur Eingabe und/oder Übertragung eines Sicherheitscodes aufweisen. Dies kann beispielsweise bei einem Verschlüsselungsverfahren vorteilhaft Anwendung finden, wobei beispielsweise ein auf einer Chipkarte (oder einem anderen Sicherheitsdatenträger, wie Magnetstreifen, Barcode (Strichcode), RFID (Radio Frequency Identification Transponder)) gespeicherter Sicherheits-Code und gegebenenfalls auch Verschlüsselungsverfahren zur Verschlüsselung und Sicherung der Daten eingesetzt und hierdurch ein besonders hohes Maß an Sicherheit (höher als bei Verwendung normaler Passwörter) erzielt werden kann, wobei gleichzeitig die Nutzung für den Anwender erleichtert und vereinfacht wird.

In einer weiteren bevorzugten Ausführungsform der erfindungsgemäßen Anordnung kann das Eingabegerät ein Kartenterminal, insbesondere für Chipkarten (Speicherchipkarten, Prozessorchipkarten), und/oder RFID-Lesegerät (Lesegerät für Radio Frequency Identification Tags oder Transponder), und/oder biometrisches Lesegerät und/oder OCR-Lesegerät und/oder Barcode-Lesegerät und/oder Magnetstreifenkarten-Lesegerät und/oder eine Tastatur aufweisen. Durch den Einsatz eines Gerätes, wie eines der oben genannten, kann ein besonders zuverlässiges, effizientes und kaum zu überlistendes Authentifizierungsverfahren bereitgestellt werden. Anstatt oder zusätzlich zu einer Tastatur kann auch ein numerisches Keypad oder beispielsweise ein graphisches Eingabesystem (wie Digitizer, Maus, Touchpad oder Touchscreen) zum Einsatz kommen.

In einer weiteren bevorzugten Ausführungsform der erfindungsgemäßen Anordnung kann das Softwaremittel des Netzwerkrechners eine Mehrzahl von Softwareeinheiten aufweisen. Dabei kann beispielsweise ein modularer Softwareaufbau angewendet werden. Prinzipiell ist es möglich, diese Software monolithisch oder modular aufzubauen. Vorteil des modularen Aufbaus liegt in der einfacheren und besseren Anpassbarkeit des Softwaremittels an die Hardware- und Betriebssystemumgebung.

In einer weiteren bevorzugten Ausführungsform der erfindungsgemäßen Anordnung kann das Softwaremittel des Netzwerkrechners einen Protokollumsetzer, vorzugsweise eine Translating Proxy aufweisen. Durch eine solche Umsetzungseinrichtung kann der Datentransfer über den Netzwerkrechner besonders ressourceschonend, effizient und manipulationssicher und ohne Mehrfachverschlüsselung gestaltet werden.

In einer weiteren bevorzugten Ausführungsform der erfindungsgemäßen Anordnung können durch das Softwaremittel des Netzwerkrechners die vom Eingabegerät vorzugsweise über die USB-Schnittstelle übermittelten Daten in ein Netzwerkprotokoll, vorzugsweise in ein TCP/IP-Protokoll umsetzbar sein. Durch eine solche Umsetzungseinrichtung kann eine effiziente, direkte Umsetzung der über die USB-Schnittstelle angelieferten und beispielsweise über Ethernet weiterversandten Daten vorgenommen werden.

In einer weiteren bevorzugten Ausführungsform der erfindungsgemäßen Anordnung kann das Softwaremittel des Netzwerkrechners einen Gerätetreiber vorzugsweise mit einer Middleware aufweisen. Durch einen Gerätetreiber kann die Schnittstelle direkt angesprochen werden, wobei eine Middleware zusätzlich den Vorteil der Reduzierung der Komplexität und der besseren Vermittlung zwischen den Softwaremodulen und leichtere Einbindung in Systemumgebungen ermöglicht.

In einer weiteren bevorzugten Ausführungsform der erfindungsgemäßen Anordnung kann das Softwaremittel des Netzwerkrechners eine Verschlüsselungseinrichtung vorzugsweise nach dem "Transport Layer Security"- (TLS) und/oder "Secure Sockets Layer"- (SSL) Verfahren aufweisen. Durch diese Verschlüsselungsverfahren lässt sich ein hohes Maß an Sicherheit bei der Übertragung der Daten im Datennetzwerk erzielen, wobei die Daten "peer-to-peer" zwischen Eingabegerät und der (Remote) Netzwerkgegenstelle geschützt werden können. Dabei weisen diese beiden Verfahren eine weite Verbreitung auf und werden bereits auf den meisten Netzwerkrechnern vorgehalten, so dass das erfindungsgemäße Verfahren mit der heutigen Infrastruktur kompatibel ist und bereits problemlos und ohne Nachrüstung in bestehenden Systemen angewendet werden kann.

In einer weiteren bevorzugten Ausführungsform der erfindungsgemäßen Anordnung kann das Datennetzwerk ein Ethernet, vorzugsweise ein TCP/IP-basiertes Ethernet sein. Ein solches insbesondere TCP/IP-basiertes Ethernet hat eine große Verbreitung und eignet sich besonders für den Aufbau eines solchen Rechnernetzes.

In einer weiteren bevorzugten Ausführungsform der erfindungsgemäßen Anordnung kann das Datennetzwerk ein Intranet und/oder Internet, insbesondere ein Internet sein. Derartige Netze sind bereits an den meisten Orten vorhanden, wobei zur unternehmensinternen Kommunikation die Infrastruktur des Intranets vorzuziehen ist. Für Angebote, die sich an Endkunden richten und einer großen Bevölkerungsgruppe zugänglich sein sollen, wie Home-Banking, eCommerce, eBusiness, eContracting, eGovernment bietet sich hingegen insbesondere das Internet als Kommunikationsnetz an.

In einer weiteren bevorzugten Ausführungsform der erfindungsgemäßen Anordnung kann das Datennetzwerk ein LAN und/oder WLAN und/oder WAN sein. Innerhalb von Firmen besteht zumeist eine LAN- oder WAN-Infrastruktur, die mit dem erfindungsgemäßen Verfahren vorteilhaft genutzt werden kann. Dabei hat sich bislang oft der Einsatz des weitaus flexibleren WLANs aus Sicherheitsgründen verboten. Durch den Einsatz des erfindungsgemäßen Verfahrens kann mit äußerst geringen Investitionen auf die bestehende Infrastruktur zurückgegriffen werden oder auf WLAN umgestellt werden, selbst in solchen Bereichen, wo bislang beispielsweise eine spezielle teure Hardware mit abhörsicherer Verkabelung eingesetzt wurde.

In einer weiteren bevorzugten Ausführungsform der erfindungsgemäßen Anordnung kann die Datenübertragung zwischen dem Eingabegerät und der Netzwerkgegenstelle bidirektional sein. Hierdurch lassen sich beispielsweise "Handshake"-Protokolle umsetzen, Verschlüsselungs- und Übertragungsparameter austauschen, die Integrität der "peers" verifizieren und/oder allgemein Rückmeldungen an das Eingabegerät übermitteln.

In einer weiteren bevorzugten Ausführungsform der erfindungsgemäßen Anordnung kann die Verschlüsselungseinrichtung des Eingabegerätes eine Ver- und Entschlüsselungseinrichtung und die Entschlüsselungseinrichtung der Netzwerkgegenstelle eine Ver- und Entschlüsselungseinrichtung sein. Hierdurch wird bei bidirektionalem Betrieb eine Datenverschlüsselung in beiden Übertragungsrichtungen ermöglicht, wodurch sich die Datensicherheit erhöht und Manipulationen an der Anordnung erschwert.

In einer weiteren bevorzugten Ausführungsform der erfindungsgemäßen Anordnung kann die Datenübertragung von der Netzwerkgegenstelle zum Eingabegerät zumindest die folgenden Schritte aufweisen:
- Verschlüsseln der Daten der Netzwerkgegenstelle durch die Ver- und Entschlüsselungseinrichtung der Netzwerkgegestelle;
- Übertragung der verschlüsselten Daten auf den Netzwerkrechner;
- Umsetzen der verschlüsselten Daten aus dem Netzwerkprotokoll in ein mit der Schnittstelle des Eingabegerätes konformes Format durch die Umsetzungseinrichtung des Netzwerkrechners;
- Übermitteln der verschlüsselten Daten an das Eingabegerät;
- Entschlüsseln der Daten durch die Ver- und Entschlüsselungseinrichtung des Eingabegerätes.

Diese Abfolge von Schritten ermöglicht eine besonders zweckmäßige und sichere Kommunikation in "Rückrichtung", von der Netzwerkgegenstelle zum Eingabegerät.

In einer weiteren bevorzugten Ausführungsform der erfindungsgemäßen Anordnung kann zumindest eine vorzugsweise beide der Ver- und/oder Entschlüsselungseinrichtungen durch zumindest eine der Einrichtungen aus Lese- und/oder Eingabeeinrichtung, Netzwerkrechner, Netzwerkgegenstelle steuerbar sein. Durch eine solche Steuerung ist es beispielsweise möglich, die Verschlüsselungsparameter auszuhandeln, wodurch eine höhere Sicherheit bei der Kommunikation erzielt werden oder eine Anpassung zwischen verschiedenen Verschlüsselungsstandards vorgenommen werden kann, wodurch sich beispielsweise die Kompatibilität erhöhen und die Weiterentwicklung der Anordnung besser vornehmen lässt.

In einer weiteren bevorzugten Ausführungsform der erfindungsgemäßen Anordnung kann die Schnittstelle des Eingabegerätes eine serielle Schnittstelle, vorzugsweise eine USB- und/oder Firewire-Schnittstelle aufweisen. Eine serielle Schnittstelle lässt sich heutzutage besonders einfach und kostengünstig realisieren und kommt mit einfachen und zuverlässigen Verbindungssteckern und dünnen, flexiblen Kabeln aus, was sie besonders für den Betrieb externer Computergeräte, wie beispielsweise des erfindungsgemäßen Eingabegerätes geeignet macht. Als Schnittstelle haben sich dabei insbesondere USB und Firewire bewährt und im Personal Computerbereich eine große Verbreitung gefunden. Daher stellen diese Schnittstellen zum Zeitpunkt dieser Anmeldung eine besonders geeignete Hardwarelösung für die Anbindung des Eingabegeräts an den Netzwerkrechner dar. Zudem ermöglichen die beiden vorgenannten Schnittstellen die flexible Anbindung und Verzweigung weiterer Hardware an den Rechner.

In einer weiteren bevorzugten Ausführungsform der erfindungsgemäßen Anordnung kann das Eingabegerät zumindest eine, vorzugsweise mehrere weitere Schnittstelle(n) zum Anschluss zumindest eines weiteren Gerätes aufweisen. Hierdurch ist der Betrieb weiterer Geräte an der Schnittstelle möglich, wobei sich gegebenenfalls auch eine günstigere Verkablung erzielen und eine weitere Belegung von Rechnerschnittstellen vermeiden lässt. Dabei muss es sich jedoch nicht zwangsläufig um externe Schnittstellen bzw. Schnittstellenstecker und/oder -buchsen handeln; ebenso möglich ist auch der Einbau weiterer oder in weitere bzw. die Integration mit weiteren Geräte(-einheiten). So ist es beispielsweise in vorteilhafter Weise möglich, ein Kartenterminal in eine Tastatur zu integrieren, welche beide über beispielsweise eine gemeinsame USB-Verbindung mit dem Netzwerkrechner kommunizieren können.

In einer weiteren bevorzugten Ausführungsform der erfindungsgemäßen Anordnung kann das Eingabegerät eine Mehrzahl logischer Kanäle zur Verbindung zwischen dem Eingabegerät und dem Netzwerkrechner aufweisen. Dadurch ist es beispielsweise möglich, andere Geräte, die an dem Eingabegerät angeschlossen sind, oder in das Eingabegerät integriert sind, über verschiedene logische Kanäle mit dem Netzwerkrechner kommunizieren zu lassen, wobei beispielsweise Datenübertragung mit unterschiedlichen Übertragungsstandards oder mit und ohne Verschlüsselung nebeneinander (auch über ein und dieselbe physikalische Schnittstelle) stattfinden kann. So kann z.B. im Falle der vorgenannten Tastatur mit Kartenterminal die Datenübertragung des Eingabegerätes verschlüsselt stattfinden, während die Tastatur (zumindest zeitweise) unverschlüsselte Daten überträgt. Ebenso kann eine Ausführungsform sinnvoll sein, bei der das Eingabegerät eine Tastatur ist, wobei diese Tastatur in konventioneller Weise zur Eingabe unverschlüsselter Daten verwendet werden kann, aber als sicheres Eingabegerät (beispielsweise automatisch bei Anwählen einer https- ("Hypertext Transfer Protocol Secure") Internetseite oder bei Übertragung sicherheitsrelevanter oder sensibler Daten beispielsweise aus bestimmten Anwendungen oder durch Benutzerwahl) geschaltet werden kann, wobei die unverschlüsselten und verschlüsselten Daten über verschiedene logische Kanäle ein und derselben physikalischen Schnittstelle übertragen werden können.

In einer weiteren bevorzugten Ausführungsform der erfindungsgemäßen Anordnung kann das Eingabegerät eine Mehrzahl logischer Kanäle zur Verbindung zwischen dem Eingabegerät und dem Netzwerkrechner aufweisen, wodurch eine Mehrzahl, in das Eingabegerät integrierter anderer Geräte anschließbar sind, wobei die Daten zumindest eines integrierten Gerätes durch die Verschlüsselungseinrichtung des Eingabegerätes verschlüsselbar sind. Dadurch ist es beispielsweise ebenfalls möglich, andere, in das Eingabegerät integrierte Geräte, über verschiedene logische Kanäle mit dem Netzwerkrechner kommunizieren zu lassen, wobei beispielsweise Datenübertragung mit unterschiedlichen Übertragungsstandards oder mit und ohne Verschlüsselung nebeneinander (auch über ein und dieselbe physikalische Schnittstelle) stattfinden kann. So kann z.B. im Falle der vorgenannten Tastatur mit integriertem Terminal für Chipkarten die Datenübertragung des Eingabegerätes verschlüsselt stattfinden, während die Tastatur (zumindest zeitweise) unverschlüsselte Daten überträgt. Eine solche Tastatur würde sich beispielsweise für das Homebanking oder als Chipkartenterminal zum Einsatz in Arztpraxen besonders eignen. In gleicher Weise könnte eine Tastatur ebenfalls mit anderen Authentifizierungs- oder Sicherheitssystemen vorteilhaft integriert werden.

In einer weiteren bevorzugten Ausführungsform der erfindungsgemäßen Anordnung können die Daten dieses zumindest einen weiteren Gerätes durch die Verschlüsselungseinrichtung des Eingabegerätes verschlüsselbar sein. In dieser Ausführungsform kann die Verschlüsselungseinrichtung des Eingabegerätes einen "Mehrfachnutzen" erzielen, indem sie ihre Verschlüsselungsfähigkeit auch anderen Geräten zur Verfügung stellt und so auch deren Daten schützt. Insbesondere kann es sich anbieten, auch die Eingaben einer angeschlossenen Tastatur zu verschlüsseln und so vor Missbrauch zu schützen. Hierdurch könnte - mit geringem Implementierungsaufwand - beispielsweise eine an das Eingabegerät angeschlossene Tastatur zur sicheren Eingabe vertraulicher oder sensibler Information wie beispielsweise von Legitimierungs-, Authentifizierungs- und/oder Transaktionsdaten verwendet werden.

In einer weiteren bevorzugten Ausführungsform der erfindungsgemäßen Anordnung können die Daten dieses zumindest einen weiteren Gerätes unverschlüsselt an den Netzwerkrechner übertragbar sein. Bei dieser Ausführungsform werden keine - oder nicht alle Daten verschlüsselt, bevor sie an den Netzwerkrechner übertragen werden. Hierdurch können Geräte am USB-Bus betrieben werden, deren Daten nicht verschlüsselt werden müssen und beispielsweise zur direkten Verwendung auf dem Netzwerkrechner vorgesehen sind.

In einer weiteren bevorzugten Ausführungsform der erfindungsgemäßen Anordnung kann die Verschlüsselung der Daten des zumindest einen weiteren Gerätes durch die Verschlüsselungseinrichtung des Eingabegerätes aus- und einschaltbar sein. Hierbei ist es möglich, die Verschlüsselung flexibel an den Bedarf anzupassen.

In einer weiteren bevorzugten Ausführungsform der erfindungsgemäßen Anordnung kann das Eingabegerät eine Hub-Funktionalität aufweisen, wodurch eine Mehrzahl anderer Geräte anschließbar sind, wobei die Daten zumindest eines angeschlossenen Gerätes durch die Verschlüsselungseinrichtung des Eingabegerätes verschlüsselbar sind. Durch eine Hub-Funktionalität ist es möglich, mehrere Geräte an das Eingabegerät anzuschließen und so die lineare Topologie zu erweitern.

In einer weiteren bevorzugten Ausführungsform der erfindungsgemäßen Anordnung kann das Eingabegerät an die Schnittstelle eines anderen am Netzwerkrechner angeschlossenen Gerätes, vorzugsweise USB- und/oder Firewire-Gerätes, insbesondere USB-Tastatur anschließbar sein. Hierdurch lässt sich gegebenenfalls die Verkabelung günstiger gestalten oder das Eingabegerät bei Bedarf nachträglich (d.h. im laufenden Rechnerbetrieb) anschließen ("hot plugging").

In einer weiteren bevorzugten Ausführungsform des erfindungsgemäßen Systems kann das Eingabegerät eine Tastatur mit einer Mehrzahl von Eingabebereichen aufweisen, wobei nur die Daten eines oder eines Teiles der Eingabebereiche durch die Verschlüsselungseinrichtung des Eingabegerätes verschlüsselbar sind. Hierdurch ist es in vorteilhafter Weise möglich, lediglich die Daten, welche in einem bestimmten Teil der Tastatur (z.B. über Zifferntasten) eingegeben warden (beispielsweise Benutzerkennzeichen, Konten- und/oder Kreditkartendaten, Passwort, PIN (Persönliche Identifikationsnummer) und/oder TAN (Transaktionsnummer)), zu verschlüsseln, während der übrige Teil der Tastatur beispielsweise in anderen Applikationen zur Eingabe wie üblich weitergenutzt werden kann. Dabei können diese Eingabebereiche Bereiche eines einheitlichen Eingabefeldes umfassen (z.B. Ziffernreihe eines alphanumerischen Eingabefeldes), temporäre Aktivierung einer Sonderbelegung von Tasten (z.B. Aktivierung der numerischen Belegung beispielsweise von Buchstabentasten einer Notebook- oder einer Kompakttastatur) oder die Nutzung des separaten Ziffernblocks (NumPad) einer konventionellen Computertastatur oder einer numerischen Zusatztastatur. Durch die eine Tastatur nach dieser Ausführungsform der Erfindung ist es möglich, dass von der Eingabe der Daten in die Tastatur bis zum Entschlüsseln der Daten auf dem Web-Server eine durchgehend sichere Verbindung bereitgestellt wird, so dass die Daten weder zwischen Netzwerkrechner und Netzwerkgegenstelle, noch zwischen Tastatur und Netzwerkrechner von unberechtigten Dritten abgehört werden können. Auch ein Angriff mittels Schadsoftware (Viren, Spyware, Trojanern, Würmern, Backdoors und sonstiger Malware) auf den Netzwerkrechner kann somit die Sicherheit der übertragenen Daten nicht gefährden.

In einer weiteren bevorzugten Ausführungsform des erfindungsgemäßen Systems kann einer der Eingabebereiche einen alphanumerischen Eingabebereich und ein anderer der Eingabebereiche einen numerischen Eingabebereich aufweisen, wobei vorzugsweise nur die Daten des numerischen Eingabebereichs verschlüsselbar sind.

Eine solche Ausführung stellt eine besonders zweckmäßige Ausführungsform der zuvor genannten Variante dar.

In einer weiteren bevorzugten Ausführungsform des erfindungsgemäßen Systems kann die Verschlüsselung der Daten durch die Verschlüsselungseinrichtung aktivierbar und deaktivierbar sein. Eine solche Ausführungsform kann vorteilhaft sein, da hierbei die Verschlüsselung nur dann aktiv ist, wenn eine sichere Verbindung zu einem vertrauenswürdigen Web-Server besteht und vertrauliche und/oder sensible Daten verschlüsselt übertragen werden sollen.

In einer weiteren bevorzugten Ausführungsform des erfindungsgemäßen Systems kann das Eingabegerät, vorzugsweise die Tastatur eine Signalisierungseinrichtung, vorzugsweise eine Leuchteinrichtung, zur Signalisierung einer sicheren Verbindung zwischen Netzwerkgegenstelle und Netzwerkrechner und zwischen Netzwerkrechner und Eingabegerät und/oder der Aktivierung der Verschlüsselungseinrichtung aufweisen. Diese Ausführungsform löst das bereits weiter oben diskutierte Problem des Standes der Technik, dass die Kennzeichnung (beispielsweise mittels des "Schloss-Symbols" im Internet-Browser) einer sicheren Verbindung durch den PC-Benutzer leicht übersehen werden kann oder dem PC-Benutzer überhaupt nicht bewusst ist, wie eine sichere Verbindung zwischen Web-Server und PC gekennzeichnet ist und welchen Gefahren er sich bei einer ungesicherten Internetverbindung aussetzt. Durch die Signalisierungseinrichtung nach dieser Ausführungsform der Erfindung wird dem Benutzer die Herstellung einer sicheren Verbindung zwischen Tastatur, Netzwerkrechner und Netzwerkgegenstelle klar und unübersehbar angezeigt und so signalisiert, dass er seine Daten sicher an einen Web-Server übermitteln kann; eine Eingabe von Daten beispielsweise bei unsicheren Internetverbindungen oder auf gefälschten Internet-Seiten wird somit wirksam verhindert.

In einer weiteren bevorzugten Ausführungsform des erfindungsgemäßen Systems kann das Eingabegerät eine Authentifizierungseinrichtung, vorzugsweise zur Authentifizierung der Netzwerkgegenstelle mittels eines digitalen Zertifikates, aufweisen. Durch eine solche Implementierung der Authentifizierungseinrichtung im Eingabegerät (und damit eine Verlagerung der Authentifizierungseinrichtung vom beispielsweise durch Schadsoftware angreifbaren Netzwerkrechner weg) kann ein sehr hohes Maß an Sicherheit erreicht werden. Der Netzwerkrechner stellt somit keine sicherheitsrelevante Komponente mehr dar, da die sicherheitsrelevanten Authetifizierungs- und Verschlüsselungsschritte bereits im Eingabegerät erfolgen.

In einer weiteren bevorzugten Ausführungsform des erfindungsgemäßen Systems kann das Eingabegerät, vorzugsweise Tastatur, einen Speicher zur Hinterlegung zumindest eines digitalen Zertifikats, vorzugsweise Wurzel-Zertifikats aufweisen und die Authentifizierung einen Vergleich eines von der Netzwerkgegenstelle empfangenen digitalen Zertifikats mit zumindest einem in dem Speicher hinterlegten digitalen Zertifikat beinhalten. Dies stellt eine besonders sinnvolle und praktikable Variante der Authentifizierung im Eingabegerät dar. Bei Verwendung von Wurzel-Zertifikaten müssen dem Eingabegerät die individuellen digitalen Zertifikate der Web-Server nicht bekannt sein, da diese von Wurzel-Zertifikaten von einer überschaubaren Anzahl bekannter sogenannter Trust Centern abgeleitet werden können. Es müssen dem Eingabegerät daher nur die häufigsten Wurzel-Zertifikate bekannt sein, um so zu überprüfen, ob ein digitales Zertifikat eines Web-Servers vertrauenswürdig ist (sofern dieses von einem dieser bekannten Wurzel-Zertifikate abgeleitet ist). Ferner besteht die Möglichkeit, weitere, beispielsweise neuere Wurzel-Zertifikate über eine sichere Verbindung von einer vertrauenswürdigen Internet-Seite in den Speicher der Tastatur nachzuladen.

In einer weiteren bevorzugten Ausführungsform des erfindungsgemäßen Systems kann nach Herstellen einer sicheren Verbindung zwischen Netzwerkgegenstelle und Netzwerkrechner und Authentifizierung der Netzwerkgegenstelle die Verschlüsselungseinrichtung aktivierbar sein. Bei dieser Ausführungsform ist die Verschlüsselungseinrichtung des Eingabegerätes nur dann aktiviert, wenn eine sichere Verbindung zwischen Netzwerkgegenstelle und Netzwerkrechner besteht und die Authentifizierung der Netzwerkgegenstelle vorzugsweise durch eine im Eingabegerät implementierte Authentifizierungseinrichtung erfolgreich durchgeführt wurde und somit die Sicherheit der Datenkommunikation gewährleistet ist. In allen anderen Fällen, in denen eine Aktivierung der Verschlüsselungseinrichtung des Eingabegerätes überflüssig wäre, arbeitet das Eingabegerät in herkömmlicher Weise ohne Verschlüsselungseinrichtung und kann somit uneingeschränkt in allen anderen Applikationen genutzt werden.

In einer weiteren bevorzugten Ausführungsform des erfindungsgemäßen Systems kann das Eingabegerät ein Authentifikationsgerät aufweisen. Die Vorteile der Erfindung lassen sich besonders vorteilhaft beim Einsatz mit einem Authentifikationsgerät nutzen, da hierbei Manipulation und Ausspionieren der Authentifikationsdaten, welche hier besonders kritisch ist, überaus wirkungsvoll und zuverlässig verhindert werden kann.

In einer weiteren bevorzugten Ausführungsform des erfindungsgemäßen Systems kann das Eingabegerät ein Gerät zur Eingabe und/oder Übertragung eines Sicherheitscodes aufweisen. Dies kann beispielsweise bei einem Verschlüsselungsverfahren vorteilhaft Anwendung finden, wobei beispielsweise ein auf einer Chipkarte (oder einem anderen Sicherheitsdatenträger, wie Magnetstreifen, Barcode (Strichcode), RFID (Radio Frequency Identification Transponder)) gespeicherter Sicherheits-Code und gegebenenfalls auch Verschlüsselungsverfahren zur Verschlüsselung und Sicherung der Daten eingesetzt und hierdurch ein besonders hohes Maß an Sicherheit (höher als bei Verwendung normaler Passwörter) erzielt werden kann, wobei gleichzeitig die Nutzung für den Anwender erleichtert und vereinfacht wird.

In einer weiteren bevorzugten Ausführungsform des erfindungsgemäßen Systems kann das Eingabegerät ein Kartenterminal, insbesondere für Chipkarten (Speicherchipkarten, Prozessorchipkarten), und/oder RFID-Lesegerät (Lesegerät für Radio Frequency Identification Tags oder Transponder) und/oder biometrisches Lesegerät und/oder OCR-Lesegerät und/oder Barcode-Lesegerät und/oder Magnetstreifenkarten-Lesegerät und/oder eine Tastatur aufweisen. Durch den Einsatz eines Gerätes, wie eines der oben genannten, kann ein besonders zuverlässiges, effizientes und kaum zu überlistendes Authentifizierungsverfahren bereitgestellt werden. Anstatt oder zusätzlich zu einer Tastatur kann auch ein numerisches Keypad oder beispielsweise ein graphisches Eingabesystem (wie Digitizer, Maus, Touchpad oder Touchscreen) zum Einsatz kommen.

In einer weiteren bevorzugten Ausführungsform des erfindungsgemäßen Systems kann das Softwaremittel des Netzwerkrechners eine Mehrzahl von Softwareeinheiten aufweisen. Dabei kann beispielsweise ein modularer Softwareaufbau angewendet werden. Prinzipiell ist es möglich, diese Software monolithisch oder modular aufzubauen. Vorteil des modularen Aufbaus liegt in der einfacheren und besseren Anpassbarkeit des Softwaremittels an die Hardware- und Betriebssystemumgebung.

In einer weiteren bevorzugten Ausführungsform des erfindungsgemäßen Systems kann das Softwaremittel des Netzwerkrechners einen Protokollumsetzer, vorzugsweise eine Translating Proxy aufweisen. Durch eine solche Umsetzungseinrichtung kann der Datentransfer über den Netzwerkrechner besonders ressourceschonend, effizient und manipulationssicher und ohne Mehrfachverschlüsselung gestaltet werden.

In einer weiteren bevorzugten Ausführungsform des erfindungsgemäßen Systems kann durch das Softwaremittel des Netzwerkrechners die vom Eingabegerät vorzugsweise über die USB-Schnittstelle übermittelten Daten in ein Netzwerkprotokoll, vorzugsweise in ein TCP/IP-Protokoll umsetzbar sein. Durch eine solche Umsetzungseinrichtung kann eine effiziente, direkte Umsetzung der über die USB-Schnittstelle angelieferten und beispielsweise über Ethernet weiterversandten Daten vorgenommen werden.

In einer weiteren bevorzugten Ausführungsform des erfindungsgemäßen Systems kann das Softwaremittel des Netzwerkrechners einen Gerätetreiber vorzugsweise mit einer Middleware aufweisen. Durch einen Gerätetreiber kann die Schnittstelle direkt angesprochen werden, wobei eine Middleware zusätzlich den Vorteil der Reduzierung der Komplexität und der besseren Vermittlung zwischen den Softwaremodulen ermöglicht.

In einer weiteren bevorzugten Ausführungsform des erfindungsgemäßen Systems kann das Softwaremittel des Netzwerkrechners eine Verschlüsselungseinrichtung vorzugsweise nach dem "Transport Layer Security"- (TLS) und/oder "Secure Sockets Layer"- (SSL) Verfahren aufweisen. Durch diese Verschlüsselungsverfahren lässt sich ein hohes Maß an Sicherheit bei der Übertragung der Daten im Datennetzwerk erzielen, wobei die Daten "peer-to-peer" zwischen Eingabegerät und der (Remote) Netzwerkgegenstelle geschützt werden können. Dabei weisen diese beiden Verfahren eine weite Verbreitung auf und werden bereits auf den meisten Netzwerkrechnern vorgehalten, so dass das erfindungsgemäße Verfahren mit der heutigen Infrastruktur kompatibel ist und bereits problemlos und ohne Nachrüstung in bestehenden Systemen angewendet werden kann.

In einer weiteren bevorzugten Ausführungsform des erfindungsgemäßen Systems kann das Datennetzwerk ein Ethernet, vorzugsweise ein TCP/IP-basiertes Ethernet sein. Ein solches insbesondere TCP/IP-basiertes Ethernet hat eine große Verbreitung und eignet sich besonders für den Aufbau eines solchen Rechnernetzes.

In einer weiteren bevorzugten Ausführungsform des erfindungsgemäßen Systems kann das Datennetzwerk ein Intranet und/oder Internet, insbesondere ein Internet sein. Derartige Netze sind bereits an den meisten Orten vorhanden, wobei zur unternehmensinternen Kommunikation die Infrastruktur des Intranets vorzuziehen ist. Für Angebote, die sich an Endkunden richten und einer großen Bevölkerungsgruppe zugänglich sein sollen, wie Home-Banking, eCommerce, eBusiness, eContracting, eGovernment bietet sich hingegen insbesondere das Internet als Kommunikationsnetz an.

In einer weiteren bevorzugten Ausführungsform des erfindungsgemäßen Systems kann das Datennetzwerk ein LAN und/oder WLAN und/oder WAN sein. Innerhalb von Firmen besteht zumeist eine LAN- oder WAN-Infrastruktur, die mit dem erfindungsgemäßen Verfahren vorteilhaft genutzt werden kann. Dabei hat sich bislang oft der Einsatz des weitaus flexibleren WLANs aus Sicherheitsgründen verboten. Durch den Einsatz des erfindungsgemäßen Verfahrens kann mit äußerst geringen Investitionen auf die bestehende Infrastruktur zurückgegriffen werden oder auf WLAN umgestellt werden, selbst in solchen Bereichen, wo bislang beispielsweise eine spezielle teure Hardware mit abhörsicherer Verkabelung eingesetzt wurde.

In einer weiteren bevorzugten Ausführungsform des erfindungsgemäßen Systems kann die Datenübertragung zwischen dem Eingabegerät und der Netzwerkgegenstelle bidirektional sein. Hierdurch lassen sich beispielsweise "Handshake"-Protokolle umsetzen, Verschlüsselungs- und Übertragungsparameter austauschen, die Integrität der "peers" verifizieren und/oder allgemein Rückmeldungen an das Eingabegerät übermitteln.

In einer weiteren bevorzugten Ausführungsform des erfindungsgemäßen Systems kann die Verschlüsselungseinrichtung des Eingabegerätes eine Ver- und Entschlüsselungseinrichtung und die Entschlüsselungseinrichtung der Netzwerkgegenstelle eine Ver- und Entschlüsselungseinrichtung sein. Hierdurch wird bei bidirektionalem Betrieb eine Datenverschlüsselung in beiden Übertragungsrichtungen ermöglicht, wodurch sich die Datensicherheit erhöht.

In einer weiteren bevorzugten Ausführungsform des erfindungsgemäßen Systems kann die Datenübertragung von der Netzwerkgegenstelle zum Eingabegerät zumindest die folgenden Schritte aufweisen:
- Verschlüsseln der Daten der Netzwerkgegenstelle durch die Ver- und Entschlüsselungseinrichtung der Netzwerkgegenstelle;
- Übertragung der verschlüsselten Daten auf den Netzwerkrechner;
- Umsetzen der verschlüsselten Daten aus dem Netzwerkprotokoll in ein mit der Schnittstelle des Eingabegerätes konformes Format durch die Umsetzungseinrichtung des Netzwerkrechners;
- Übermitteln der verschlüsselten Daten an das Eingabegerät;
- Entschlüsseln der Daten durch die Ver- und Entschlüsselungseinrichtung des Eingabegerätes.

Diese Abfolge von Schritten ermöglicht eine besonders zweckmäßige und sichere Kommunikation in "Rückrichtung", von der Netzwerkgegenstelle zum Eingabegerät.

In einer weiteren bevorzugten Ausführungsform des erfindungsgemäßen Systems kann zumindest eine vorzugsweise beide der Ver- und/oder Entschlüsselungseinrichtungen durch zumindest eine der Einrichtungen von Lese- und/oder Eingabeeinrichtung, Netzwerkrechner, Netzwerkgegenstelle steuerbar sein. Durch eine solche Steuerung ist es beispielsweise möglich, die Verschlüsselungsparameter auszuhandeln, wodurch eine höhere Sicherheit bei der Kommunikation erzielt werden oder eine Anpassung zwischen verschiedenen Verschlüsselungsstandards vorgenommen werden kann, wodurch sich beispielsweise die Kompatibilität erhöhen und die Weiterentwicklung der Standards besser vornehmen lässt.

In einer weiteren bevorzugten Ausführungsform des erfindungsgemäßen Systems kann die Schnittstelle des Eingabegerätes eine serielle Schnittstelle, vorzugsweise eine USB- und/oder Firewire-Schnittstelle aufweisen. Eine serielle Schnittstelle lässt sich heutzutage besonders einfach und kostengünstig realisieren und kommt mit einfachen und zuverlässigen Verbindungssteckern und dünnen, flexiblen Kabeln aus, was sie besonders für den Betrieb externer Computergeräte, wie beispielsweise des erfindungsgemäßen Eingabegerätes geeignet macht. Als Schnittstelle haben sich dabei insbesondere USB und Firewire bewährt und im Personal Computerbereich eine große Verbreitung gefunden. Daher stellen diese Schnittstellen zum Zeitpunkt dieser Anmeldung eine besonders geeignete Hardwarelösung für die Anbindung des Eingabegeräts an den Netzwerkrechner dar. Zudem ermöglichen die beiden vorgenannten Schnittstellen die flexible Anbindung und Verzweigung weiterer Hardware an den Rechner.

In einer weiteren bevorzugten Ausführungsform des erfindungsgemäßen Systems kann das Eingabegerät zumindest eine, vorzugsweise mehrere weitere Schnittstelle(n) zum Anschluss zumindest eines weiteren Gerätes aufweisen. Hierdurch ist der Betrieb weiterer Geräte an der Schnittstelle möglich, wobei sich gegebenenfalls auch eine günstigere Verkablung erzielen und eine weitere Belegung von Rechnerschnittstellen vermeiden lässt. Dabei muss es sich jedoch nicht zwangsläufig um externe Schnittstellen bzw. Schnittstellenstecker und/oder -buchsen handeln; ebenso möglich ist auch der Einbau weiterer oder in weitere bzw. die Integration mit weiteren Geräte(-einheiten). So ist es beispielsweise in vorteilhafter Weise möglich, ein Kartenterminal in eine Tastatur zu integrieren, welche beide über beispielsweise eine gemeinsame USB-Verbindung mit dem Netzwerkrechner kommunizieren können.

In einer weiteren bevorzugten Ausführungsform des erfindungsgemäßen Systems kann das Eingabegerät eine Mehrzahl logischer Kanäle zur Verbindung zwischen dem Eingabegerät und dem Netzwerkrechner aufweisen. Dadurch ist es beispielsweise möglich, andere Geräte, die an dem Eingabegerät angeschlossen sind, oder in das Eingabegerät integriert sind, über verschiedene logische Kanäle mit dem Netzwerkrechner kommunizieren zu lassen, wobei beispielsweise Datenübertragung mit unterschiedlichen Übertragungsstandards oder mit und ohne Verschlüsselung nebeneinander (auch über ein und dieselbe physikalische Schnittstelle) stattfinden kann. So kann z.B. im Falle der vorgenannten Tastatur mit Kartenterminal die Datenübertragung des Eingabegerätes verschlüsselt stattfinden, während die Tastatur (zumindest zeitweise) unverschlüsselte Daten überträgt. Ebenso kann eine Ausführungsform sinnvoll sein, bei der das Eingabegerät eine Tastatur ist, wobei diese Tastatur in konventioneller Weise zur Eingabe unverschlüsselter Daten verwendet werden kann, aber als sicheres Eingabegerät (beispielsweise automatisch bei Anwählen einer https- ("Hypertext Transfer Protocol Secure") Internetseite oder bei Übertragung sicherheitsrelevanter oder sensibler Daten beispielsweise aus bestimmten Anwendungen oder durch Benutzerwahl) geschaltet werden kann, wobei die unverschlüsselten und verschlüsselten Daten über verschiedene logische Kanäle ein und derselben physikalischen Schnittstelle übertragen werden können.

In einer weiteren bevorzugten Ausführungsform des erfindungsgemäßen Systems kann das Eingabegerät eine Mehrzahl logischer Kanäle zur Verbindung zwischen dem Eingabegerät und dem Netzwerkrechner aufweisen, wodurch eine Mehrzahl, in das Eingabegerät integrierter anderer Geräte anschließbar sind, wobei die Daten zumindest eines integrierten Gerätes durch die Verschlüsselungseinrichtung des Eingabegerätes verschlüsselbar sind. Dadurch ist es beispielsweise ebenfalls möglich, andere, in das Eingabegerät integrierte Geräte, über verschiedene logische Kanäle mit dem Netzwerkrechner kommunizieren zu lassen, wobei beispielsweise Datenübertragung mit unterschiedlichen Übertragungsstandards oder mit und ohne Verschlüsselung nebeneinander (auch über ein und dieselbe physikalische Schnittstelle) stattfinden kann. So kann z.B. im Falle der vorgenannten Tastatur mit integriertem Terminal für Chipkarten die Datenübertragung des Eingabegerätes verschlüsselt stattfinden, während die Tastatur (zumindest zeitweise) unverschlüsselte Daten überträgt. Eine solche Tastatur würde sich beispielsweise für das Homebanking oder als Chipkartenterminal zum Einsatz in Arztpraxen besonders eignen. In gleicher Weise könnte eine Tastatur ebenfalls mit anderen Authentifizierungs- oder Sicherheitssystemen vorteilhaft integriert werden.

In einer weiteren bevorzugten Ausführungsform des erfindungsgemäßen Systems können die Daten dieses zumindest einen weiteren Gerätes durch die Verschlüsselungseinrichtung des Eingabegerätes verschlüsselbar sein. In dieser Ausführungsform kann die Verschlüsselungseinrichtung des Eingabegerätes einen "Mehrfachnutzen" erzielen, indem sie ihre Verschlüsselungsfähigkeit auch anderen Geräten zur Verfügung stellt und so auch deren Daten schützt. Insbesondere kann es sich anbieten, auch die Eingaben einer angeschlossenen Tastatur zu verschlüsseln und so vor Missbrauch zu schützen. Hierdurch könnte - mit geringem Implementierungsaufwand - beispielsweise eine an das Eingabegerät angeschlossene Tastatur zur sicheren Eingabe vertraulicher oder sensibler Information wie beispielsweise von Legitimierungs-, Authentifizierungs- und/oder Transaktionsdaten verwendet werden.

In einer weiteren bevorzugten Ausführungsform des erfindungsgemäßen Systems können die Daten dieses zumindest einen weiteren Gerätes unverschlüsselt an den Netzwerkrechner übertragbar sein. Bei dieser Ausführungsform werden keine - oder nicht alle Daten verschlüsselt, bevor sie an den Netzwerkrechner übertragen werden. Hierdurch können Geräte am USB-Bus betrieben werden, deren Daten nicht verschlüsselt werden müssen und beispielsweise direkt auf dem Netzwerkrechner verwendet werden sollen.

In einer weiteren bevorzugten Ausführungsform des erfindungsgemäßen Systems kann die Verschlüsselung der Daten des zumindest einen weiteren Gerätes durch die Verschlüsselungseinrichtung des Eingabegerätes aus- und einschaltbar sein. Hierbei ist es möglich, die Verschlüsselung flexibel an den Bedarf anzupassen.

In einer weiteren bevorzugten Ausführungsform des erfindungsgemäßen Systems kann das Eingabegerät eine Hub-Funktionalität aufweisen, wodurch eine Mehrzahl anderer Geräte anschließbar sind, wobei die Daten zumindest eines angeschlossenen Gerätes durch die Verschlüsselungseinrichtung des Eingabegerätes verschlüsselbar sind. Durch eine Hub-Funktionalität ist es möglich, mehrere Geräte an das Eingabegerät anzuschließen und so die lineare Topologie zu erweitern.

In einer weiteren bevorzugten Ausführungsform des erfindungsgemäßen Systems kann das Eingabegerät an die Schnittstelle eines anderen am Netzwerkrechner angeschlossenen Gerätes, vorzugsweise USB- und/oder Firewire-Gerätes, insbesondere USB-Tastatur anschließbar sein. Hierdurch lässt sich gegebenenfalls die Verkabelung günstiger gestalten oder das Eingabegerät bei Bedarf nachträglich (d.h. im laufenden Rechnerbetrieb) anschließen ("hot plugging").

In einer weiteren bevorzugten Ausführungsform des erfindungsgemäßen Softwaremittels kann durch das Softwaremittel - vorzugsweise nach Überprüfung der Herstellung einer sicheren Verbindung zwischen Netzwerkgegenstelle und Netzwerkrechner und Authentifizierung der Netzwerkgegenstelle - eine Verschlüsselungseinrichtung des Eingabegerätes zur Herstellung einer sicheren Verbindung zwischen Netzwerkrechner und Tastatur aktivierbar sein. Bei dieser Ausführungsform ist die Verschlüsselungseinrichtung des Eingabegerätes nur dann aktiviert, wenn eine sichere Verbindung zwischen Netzwerkgegenstelle und Netzwerkrechner besteht und die Authentifizierung der Netzwerkgegenstelle vorzugsweise durch eine im Eingabegerät implementierte Authentifizierungseinrichtung erfolgreich durchgeführt wurde und somit die Sicherheit der Datenkommunikation gewährleistet ist. In allen anderen Fällen, in denen eine Aktivierung der Verschlüsselungseinrichtung des Eingabegerätes überflüssig wäre, arbeitet das Eingabegerät in herkömmlicher Weise ohne Verschlüsselungseinrichtung und kann somit uneingeschränkt in allen anderen Applikationen genutzt werden.

In einer weiteren bevorzugten Ausführungsform des erfindungsgemäßen Softwaremittels kann das Softwaremittel des Netzwerkrechners eine Mehrzahl von Softwareeinheiten aufweisen. Dabei kann beispielsweise ein modularer Softwareaufbau angewendet werden. Prinzipiell ist es möglich, diese Software monolithisch oder modular aufzubauen.

Vorteil des modularen Aufbaus liegt in der einfacheren und besseren Anpassbarkeit des Softwaremittels an die Hardware- und Betriebssystemumgebung.

In einer weiteren bevorzugten Ausführungsform des erfindungsgemäßen Softwaremittels kann durch das Softwaremittel des Netzwerkrechners die vom Eingabegerät vorzugsweise über die USB-Schnittstelle übermittelten Daten in ein Netzwerkprotokoll, vorzugsweise in ein TCP/IP-Protokoll umsetzbar sein. Durch eine solche Umsetzungseinrichtung ist eine effiziente, direkte Umsetzung der über die USB-Schnittstelle angelieferten und beispielsweise über Ethernet weiterversandten Daten vorgenommen werden.

In einer weiteren bevorzugten Ausführungsform des erfindungsgemäßen Softwaremittels kann das Softwaremittel des Netzwerkrechners einen Gerätetreiber vorzugsweise mit einer Middleware aufweisen. Durch einen Gerätetreiber kann die Schnittstelle direkt angesprochen werden, wobei eine Middleware zusätzlich den Vorteil der Reduzierung der Komplexität und der besseren Vermittlung zwischen den Softwaremodulen ermöglicht.

In einer weiteren bevorzugten Ausführungsform des erfindungsgemäßen Softwaremittels kann das Softwaremittel des Netzwerkrechners einen Protokollumsetzer, vorzugsweise eine Translating Proxy aufweisen. Durch eine solche Umsetzungseinrichtung kann der Datentransfer über den Netzwerkrechner besonders ressourceschonend, effizient und manipulationssicher und ohne Mehrfachverschlüsselung gestaltet werden.

In einer weiteren bevorzugten Ausführungsform des erfindungsgemäßen Softwaremittels kann das Softwaremittel des Netzwerkrechners eine Verschlüsselungseinrichtung vorzugsweise nach dem "Transport Layer Security"- (TLS) und/oder "Secure Sockets Layer"- (SSL) Verfahren aufweisen. Durch diese Verschlüsselungsverfahren lässt sich ein hohes Maß an Sicherheit bei der Übertragung der Daten im Datennetzwerk erzielen, wobei die Daten "peer-to-peer" zwischen Eingabegerät und der (Remote) Netzwerkgegenstelle geschützt werden können. Dabei weisen diese beiden Verfahren eine weite Verbreitung auf und werden bereits auf den meisten Netzwerkrechnern vorgehalten, so dass das erfindungsgemäße Verfahren mit der heutigen Infrastruktur kompatibel ist und bereits problemlos und ohne Nachrüstung bestehender Systeme angewendet werden kann.

In einer weiteren bevorzugten Ausführungsform des erfindungsgemäßen Softwaremittels kann das Datennetzwerk ein Ethernet, vorzugsweise ein TCP/IP-basiertes Ethernet sein. Ein solches insbesondere TCP/IP-basiertes Ethernet hat eine große Verbreitung und eignet sich besonders für den Aufbau eines solchen Rechnernetzes. Ein solches insbesondere TCP/IP-basiertes Ethernet hat eine große Verbreitung und eignet sich besonders für den Aufbau eines solchen Rechnernetzes.

In einer weiteren bevorzugten Ausführungsform des erfindungsgemäßen Softwaremittels kann das Datennetzwerk ein Intranet und/oder Internet, insbesondere ein Internet sein. Derartige Netze sind bereits an den meisten Orten vorhanden, wobei zur unternehmensinternen Kommunikation die Infrastruktur des Intranets vorzuziehen ist. Für Angebote, die sich an Endkunden richten und einer großen Bevölkerungsgruppe zugänglich sein sollen, wie Home-Banking, eCommerce, eBusiness, eContracting, eGovernment bietet sich hingegen insbesondere das Internet als Kommunikationsnetz an.

In einer weiteren bevorzugten Ausführungsform des erfindungsgemäßen Softwaremittels kann das Datennetzwerk ein LAN und/oder WLAN und/oder WAN sein. Innerhalb von Firmen besteht zumeist eine LAN- oder WAN-Infrastruktur, die mit dem erfindungsgemäßen Verfahren vorteilhaft genutzt werden kann. Dabei hat sich bislang oft der Einsatz des weitaus flexibleren WLANs aus Sicherheitsgründen verboten. Durch den Einsatz des erfindungsgemäßen Verfahrens kann mit äußerst geringen Investitionen auf die bestehende Infrastruktur zurückgegriffen werden oder auf WLAN umgestellt werden, wo bislang beispielsweise eine spezielle teure Hardware mit abhörsicherer Verkabelung eingesetzt wurde.

In einer weiteren bevorzugten Ausführungsform des erfindungsgemäßen Softwaremittels kann die Datenübertragung zwischen dem Eingabegerät und der Netzwerkgegenstelle bidirektional sein. Hierdurch lassen sich beispielsweise "Handshake"-Protokoll umsetzen, Verschlüsselungs- und Übertragungsparameter austauschen, die Integrität der "peers" verifizieren und/oder allgemein Rückmeldungen an das Eingabegerät übermitteln.

Anhand der Zeichnungen wird die Erfindung nachstehend eingehend erläutert.

Es zeigt:
- Figur 1: Die schematische Darstellung eines Protokollstapels nach einer Ausführungsform der Erfindung;
- Figur 2: die schematische Darstellung eines Datenflussplans für ein Eingabegerät nach einer Ausführungsform der Erfindung, welches zusammen mit einer Tastatur an einem Netzwerkrechner anschlossen ist;
- Figur 3: die schematische Darstellung einer sicheren Datenkommunikationsverbindung über Internet (z.B. für Home-Banking oder e-Commerce) nach einer zweiten Ausführungsform der Erfindung;
- Figur 4: die schematische Darstellung eines Datenflussplans für ein Eingabegerät nach der zweiten Ausführungsform der Erfindung.

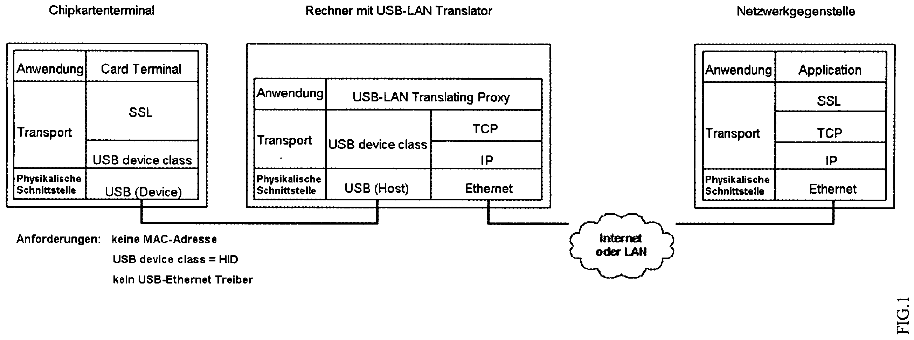

Aus der Darstellung gemäß Figur 1 geht der Protokollstapel für ein Kartenterminal, welches über einen Netzwerkrechner mit einer (Remote) Netzwerkgegenstelle kommuniziert, hervor.

Innerhalb des Kartenterminals werden die von der Chipkarte ausgelesenen Daten zur Verschlüsselung an eine SSL- ("Secure Socket Layer") Komponente übergeben und verschlüsselt. Von dieser SSL-Komponente werden die verschlüsselten Daten an eine als "USB class device" bezeichnete Komponente weitergeleitet und von dort über den USB-Bus an den Host-Rechner (Netzwerkrechner) übertragen, wo sie wiederum von einer "USB class device"-Komponente angenommen werden. Eine Softwarekomponente, genannt "USB-LAN Translating Proxy" im Host-Rechner übernimmt die Umsetzung der verschlüsselten USB-Daten in das Netzwerkprotokoll (z.B. TCP/IP-basiertes Ethernet) und übergibt sie dem TCP/IP-Stack. Von dort aus werden die Daten über eine Ethernet-Schnittstelle beispielsweise über Internet oder LAN zur Netzwerkgegenstelle (z.B. Remote Internet-Server) übertragen und wiederum über eine Ethernet-Schnittstelle in der Netzwerkgegenstelle empfangen, in der Netzwerkgegenstelle in den TCP/IP-Stack aufgenommen und umgesetzt, über eine entsprechende SSL-Komponente entschlüsselt und an eine Anwendung ("Application") übergeben.

Dabei sind im Beispiel dieser Ausführungsform der Erfindung "USB class device"-Treiberkomponente, "USB-LAN Translating Proxy" und "TCP/IP-Stack" im Host-Rechner Teile eines Softwaremittels des Netzwerkrechners, wie es im unabhängigen Anspruch 67 beansprucht wird.

Bei bidirektionalem Datenaustausch zwischen Kartenterminal und Netzwerkgegenstelle kann in entsprechender Weise aber umgekehrter Reihenfolge eine Datenübertragung von der Netzwerkgegenstelle zurück zum Kartenterminal erfolgen, wobei sich der Datenfluss und die Schlüsselungsrichtung der Daten (d.h. Ver- und Entschlüsselung) umkehren.

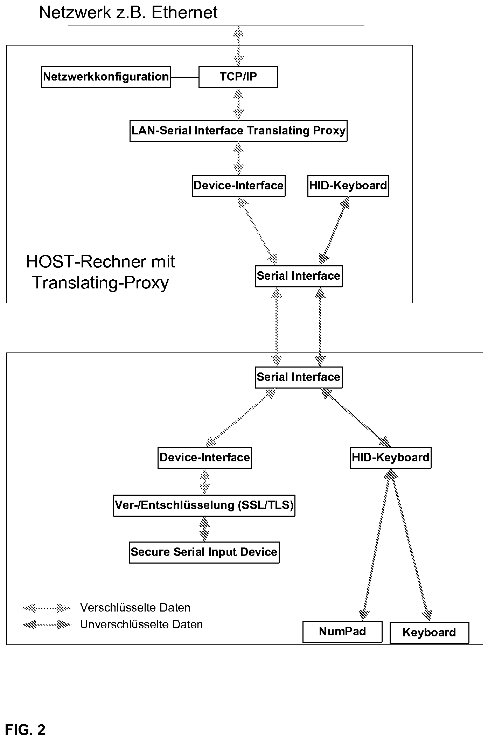

Figur 2 zeigt die schematische Darstellung eines Datenflussplans für ein Eingabegerät nach einer Ausführungsform der Erfindung, welches zusammen mit einer Tastatur an einem Netzwerkrechner anschlossen ist. Der in dieser Abbildung unten dargestellte Kasten beinhaltet schematisch die beiden gemeinsam an einem USB-Bus des im oberen Kasten dargestellten Host-Rechners angeschlossenen externen USB-Geräte, die "Secure Serial Input Device" (SSID) und ein "Human Interface Device"- (HID)-Keyboard (Tastatur) mit "NumPad" (Ziffern-Eingabeblock). Dabei wäre es beispielsweise auch denkbar, dass eine Tastatur gleichzeitig als "Secure Serial Input Device" wie auch als (HID)-Keyboard dient, wobei die Tastatur einmal in konventioneller Weise unverschlüsselte Daten überträgt, aber auch als sicheres Eingabegerät zur verschlüsselten Übertragung von Daten geschaltet werden kann, wobei die unverschlüsselten und verschlüsselten Daten über verschiedene logische Kanäle ein und derselben physikalischen Schnittstelle übertragen werden können.

Auch hier ist in der "Secure Serial Input Device" (SSID) eine Ver- und Entschlüsselungskomponente nach dem SSL/TLS-Verfahren und das "Device-Interface" für das "Serial Interface" des USB-Busses zu erkennen. Dabei wäre es beispielsweise möglich, dass die "Secure Serial Input Device" an einem USB-Port des HID-Keyboards anschlossen ist (oder umgekehrt, dass das "HID-Keyboard" mit einem USB-Port der "Secure Serial Input Device" verbunden ist). Der Darstellung in Figur 2 ist ebenfalls zu entnehmen, dass die Daten der "Secure Serial Input Device" in verschlüsslter Form über den USB-Bus übertragen werden, während die Daten von "Keyboards" und "NumPad" ohne Verschlüsselung versandt werden.

Der Host-Rechner beherbergt wiederum das "Device-Interface" für den USB-Bus, die "LAN-Serial Interface Translating Proxy" sowie die "TCP/IP-Netzwerkkomponente", die beispielsweise über TCP/IP-basiertes Ethernet die Verbindung zum Remote Internet-Server (der Netzwerkgegenstelle) herstellt. Die drei vorgenannten Softwarekomponenten "Device-Interface", "LAN-Serial Interface Translating Proxy" und "TCP/IP-Netzwerkkomponente" stellen dabei Teile des Softwaremittels dar, wie es im unabhängigen Anspruch 67 beansprucht wird.

Dabei ist es möglich, dieses Softwaremittel beispielsweise monolithisch oder modular aufzubauen. Vorteil des modularen Aufbaus ist die einfachere und bessere Anpassbarkeit des Softwaremittels an die Hardware- und Betriebssystemumgebung. Dem gegenüber bietet ein monolithischer Aufbau des Softwaremittels eine höhere Manipulationssicherheit beispielsweise hinsichtlich von Angriffen von Malware. Zwar würde ein Angriff auf das Softwaremittel dem Angreifer allenfalls Zugang zu dem verschlüsselten Datenstrom ermöglichen, jedoch sind bei einem monolithischen Aufbau u.U. Eingriffe in die Integrität des Datenstroms oder Manipulationen an einem der Endgeräte, dem Remote Internet-Server oder der "Secure Serial Input Device", wirkungsvoller zu überwachen, wenn keine weitere (manipulierbare) Softwarekomponente in den Datentransfer des Netzwerkrechners involviert ist. Darüber hinaus kann eine solche monolithische Softwarekomponente auch besser gegen potentielle Angriffe geschützt werden, als dies bei einem Zusammenwirken unabhängiger Softwarekomponenten u.U. verschiedener Hersteller oder bei Verwendung beispielsweise von Standardtreiberkomponenten oder Internetbrowsern möglich wäre.

Die hier auf Basis der wesentlichen "Layer" dargestellten Ausführungsbeispiele der Erfindung kann gleichermaßen auf Verfahren, Anordnung, System und Softwaremittel bezogen werden und so dem allen vier beanspruchten Aspekten dieser Erfindung zugrundeliegenden Grundgedanken zur Erläuterung dienen.

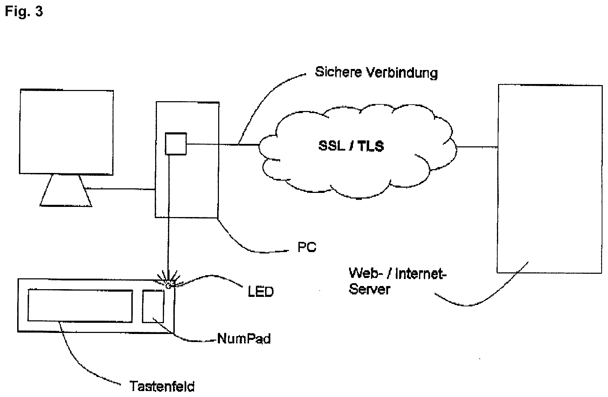

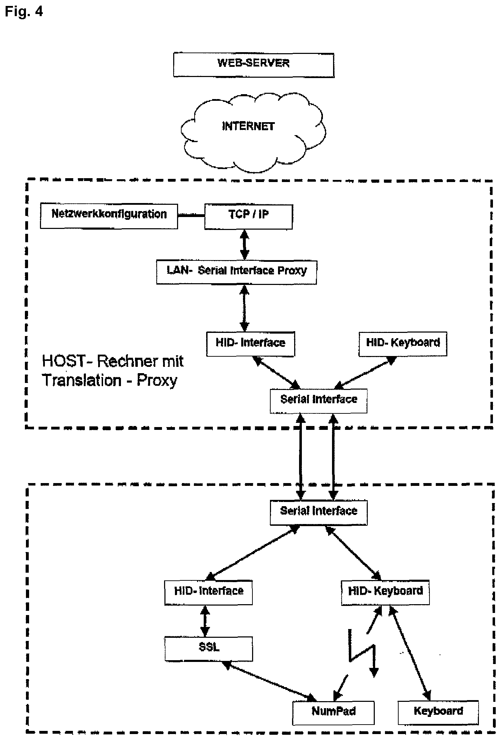

Im Folgenden wird anhand der Figuren 3 und 4 eine zweite Ausführungsform der Erfindung exemplarisch am konkreten Beispiel einer sicheren Datenkommunikationsverbindung über Internet (z.B. für Home-Banking oder e-Commerce) dargestellt.

Der Benutzer startet auf seinem PC-System den Internet-Browser und öffnet eine sichere und vertrauenswürdige Internet-Seite (z.B. Home-Banking oder e-Commerce) auf dem Web-Server. Der Browser baut zum Web-Server eine sichere Verbindung über ein bekanntes Verfahren (SSL oder TLS) auf.

Eine spezifische Software-Komponente, die auf dem Host-Rechner installiert ist, erkennt dieses Ereignis und triggert eine spezifische Anti-Phishing-Tastatur an, eine sichere Verbindung zum Web-Server aufzubauen. Anhand eines digitalen Zertifikates identifiziert die Anti-Phishing-Tastatur den Web-Server und baut die sichere Verbindung auf. Durch eine blinkende LED (und/oder ein akustisches Signal) wird der Aufbau der sicheren Verbindung dem Benutzer angezeigt. Solange die sichere Verbindung zum Web-Server besteht, befindet sich die Anti-Phishing-Tastatur in einem "sicheren Modus". Dabei ist der numerische Eingabeblock (NumPad) der Anti-Phishing-Tastatur gesperrt und kann nur für verschlüsselte Eingaben über die sichere Verbindung zum Web-Server genutzt werden. Der alpha-numerische Block der Anti-Phishing-Tastatur kann weiterhin für die Eingaben in andere Applikationen benutzt werden. Eine Software-Kmponente am Web-Server steuert die Kommunikation mit der Anti-Phishing-Tastatur (z.B. Datenauswertung, Rückmeldung von "Sternchen" zur Ausgabe auf dem Bildschirm des Benutzers beispielsweise bei der Eingabe von Passwörtern u.a., Beendigung der sicheren Verbindung).

Falls das digitale Zertifikat des Web-Servers nicht bekannt ist, geht die Anti-Phishing-Tastatur nicht in den "sicheren Modus" und die LED blinkt nicht. In diesem Falle besteht "Phishing-Gefahr".

Die häufigsten digitalen Zertifikate können als Wurzel-Zertifikate standardmäßig in die Anti-Phishing-Tastatur programmiert sein. Es besteht jedoch auch die Möglichkeit, später weitere oder neuere Wurzel-Zertifikate in die Anti-Phishing-Tastatur nachzuladen. Entsprechende Konfigurationsdateien können dafür auf vertrauenswürdigen Internet-Seiten zum Download bereitgestellt werden. Diese Konfigurationsdateien sind ebenfalls digital signiert und können vom Benutzer per sicherem Download in die Tastatur geladen werden.

Zusätzliche Erläuterung: Alle digitalen Zertifikate werden von sogenannten Wurzel-Zertifikaten abgeleitet. Die Wurzel-Zertifikate stammen von vertrauenswürdigen Seiten (sogenannten Trust Centern), welche auch die digitalen Zertifikate ausstellen. Eine Anti-Phishing-Tastatur nach dieser Ausführungsform der Erfindung muss nur die häufigsten Wurzel-Zertifikate kennen und kann so überprüfen, ob ein digitales Zertifikat eines Web-Servers vertrauenswürdig ist (sofern dieses von einem dieser bekannten Wurzel-Zertifikate abgeleitet ist).

## Patentansprüche

1. Verfahren zur sicheren Datenübertragung zwischen einem mit einem Netzwerkrechner verbundenen Eingabegerät und einer Netzwerkgegenstelle, welche mit dem Netzwerkrechner über ein Datennetzwerk verbunden ist, wobei das Eingabegerät eine Verschlüsselungseinrichtung aufweist, welche zwischen einer Lese- und/oder Eingabeeinrichtung des Eingabegerätes und einer Schnittstelle des Eingabegerätes, durch welche das Eingabegerät mit dem Netzwerkrechner verbindbar ist, angeordnet ist, wobei der Netzwerkrechner eine Umsetzeinrichtung mit einem Softwaremittel aufweisen, das einen Protokollumsetzer, vorzugsweise eine Translating Proxy aufweist und durch welches die vom Eingabegerät vorzugsweise über eine USB-Schnittstelle übermittelten Daten in ein Netzwerkprotokoll, vorzugsweise in ein TCP/IP-Protokoll umsetzbar sind, wobei das Verfahren die folgenden Schritte aufweist:
- Übergeben von Daten der Lese- und/oder Eingabeeinrichtung des Eingabegerätes an die Verschlüsselungseinrichtung des Eingabegerätes;
- Verschlüsseln der Daten durch die Verschlüsselungseinrichtung des Eingabegerätes;
- Übermitteln der verschlüsselten Daten an den Netzwerkrechner;
- Umsetzen der verschlüsselten Daten in ein Netzwerkprotokoll durch die Umsetzungseinrichtung des Netzwerkrechners;
- Übertragung der verschlüsselten Daten auf die Netzwerkgegenstelle;
- Entschlüsseln der verschlüsselten Daten durch eine Entschlüsselungseinrichtung der Netzwerkgegenstelle, wobei das Verfahren ein Authentifikationsverfahren ist, **dadurch gekennzeichnet, dass** die Datenübertragung zwischen dem Eingabegerät und der Netzwerkgegenstelle bidirektional ist, wobei die Verschlüsselungseinrichtung des Eingabegerätes eine Ver- und Entschlüsselungseinrichtung und die Entschlüsselungseinrichtung der Netzwerkgegenstelle eine Ver- und Entschlüsselungseinrichtung ist.

2. Verfahren nach Anspruch 1 **dadurch gekennzeichnet, dass** das Eingabegerät eine Tastatur mit einer Mehrzahl von Eingabebereichen aufweist, wobei nur die Daten eines oder eines Teiles der Eingabebereiche durch die Verschlüsselungseinrichtung des Eingabegerätes verschlüsselbar sind.

3. Verfahren nach Anspruch 2 **dadurch gekennzeichnet, dass** einer der Eingabebereiche einen alphanumerischen Eingabebereich und ein anderer der Eingabebereiche einen numerischen Eingabebereich aufweist, wobei vorzugsweise nur die Daten des numerischen Eingabebereichs verschlüsselbar sind.

4. Verfahren nach zumindest einem der Ansprüche 1 - 3 **dadurch gekennzeichnet, dass** die Verschlüsselung der Daten durch die Verschlüsselungseinrichtung aktivierbar und deaktivierbar ist.

5. Verfahren nach zumindest einem der Ansprüche 1 - 4 **dadurch gekennzeichnet, dass** das Eingabegerät, vorzugsweise die Tastatur eine Signalisierungseinrichtung, vorzugsweise eine Leuchteinrichtung, zur Signalisierung einer sicheren Verbindung zwischen Netzwerkgegenstelle und Netzwerkrechner und zwischen Netzwerkrechner und Eingabegerät und/oder der Aktivierung der Verschlüsselungseinrichtung aufweist.

6. Verfahren nach zumindest einem der Ansprüche 1 - 5 **dadurch gekennzeichnet, dass** das Verfahren zumindest einen Authentifikationsschritt, vorzugsweise zur Authentifizierung der Netzwerkgegenstelle, beinhaltet.

7. Verfahren nach Anspruch 6 **dadurch gekennzeichnet, dass** zumindest ein Authentifikationsschritt die Authentifizierung eines digitalen Zertifikates beinhaltet.

8. Verfahren nach zumindest einem der Ansprüche 6 oder 7 **dadurch gekennzeichnet, dass** zumindest ein Authentifikationsschritt durch eine Authentifizierungseinrichtung des Eingabegerätes, vorzugsweise der Tastatur, durchgeführt wird.

9. Verfahren nach Anspruch 8 **dadurch gekennzeichnet, dass** die Authentifizierung einen Vergleich eines von der Netzwerkgegenstelle empfangenen digitalen Zertifikats mit zumindest einem in dem Eingabegerät, vorzugsweise Tastatur hinterlegten digitalen Zertifikat, vorzugsweise WurzelZertifikat, beinhaltet.

10. Verfahren nach zumindest einem der Ansprüche 6 - 9 **dadurch gekennzeichnet, dass** nach Herstellen einer sicheren Verbindung zwischen Netzwerkgegenstelle und Netzwerkrechner und Authentifizierung der Netzwerkgegenstelle die Verschlüsselungseinrichtung aktivierbar ist.

11. Verfahren nach zumindest einem der Ansprüche 1 - 11 **dadurch gekennzeichnet, dass** das Verfahren ein Verfahren zur Verschlüsselung von Daten auf dem Netzwerkrechner und/oder auf der Netzwerkgegenstelle aufweist.

12. Verfahren nach zumindest einem der Ansprüche 1 - 11 **dadurch gekennzeichnet, dass** das Eingabegerät ein Authentifizierungsgerät, insbesondere ein Kartenterminal und/oder RFID-Lesegerät (Lesegerät für Radio Frequency Identification Tags oder Transponder) und/oder biometrisches Lesegerät und/oder OCR-Lesegerät und/oder BarcodeLesegerät und/oder Magnetstreifenkarten-Lesegerät und/oder eine Tastatur aufweist.

13. Verfahren nach zumindest einem der Ansprüche 1 - 12 **dadurch gekennzeichnet, dass** die Umsetzungseinrichtung des Netzwerkrechners einen Gerätetreiber vorzugsweise mit einer Middleware aufweist.

14. System zur Ausführung eines Verfahrens nach einem der vorherigen Ansprüche, **dadurch gekennzeichnet, dass** das System ein Eingabegerät, welches mit einem Netzwerkrechner verbindbar ist, den Netzwerkrechner und eine Netzwerkgegenstelle, welche mit dem Netzwerkrechner über ein Datennetzwerk verbindbar ist, aufweist, wobei das Eingabegerät eine Verschlüsselungseinrichtung aufweist, welche zwischen einer Lese- und/oder Eingabeeinrichtung des Eingabegerätes und einer Schnittstelle des Eingabegerätes, durch welche das Eingabegerät mit dem Netzwerkrechner verbindbar ist, angeordnet ist, wobei Daten von der Lese- und/oder Eingabeeinrichtung an die Verschlüsselungseinrichtung übergebar sind, die Daten durch die Verschlüsselungseinrichtung verschlüsselbar sind und die verschlüsselten Daten an den Netzwerkrechner übermittelbar sind, wobei der Netzwerkrechner eine Umsetzeinrichtung mit einem Softwaremittel zur Übernahme der verschlüsselten Daten des Eingabegerätes, Umsetzung dieser Daten in ein Netzwerkprotokoll und Übertragung dieser Daten zur Netzwerkgegenstelle über eine Verbindung aufweist, wobei das Softwaremittel einen Protokollumsetzer, vorzugsweise eine Translating Proxy aufweist, wobei die Datenübertragung zwischen dem Eingabegerät und der Netzwerkgegenstelle bidirektional ist, wobei die Verschlüsselungseinrichtung des Eingabegerätes eine Ver- und Entschlüsselungseinrichtung und die Entschlüsselungseinrichtung der Netzwerkgegenstelle eine Ver- und Entschlüsselungseinrichtung ist.

## Claims

1. Method for secure data transmission between an input device connected to a network computer and a remote network station connected to the network computer via a data network, wherein the input device comprises encryption means arranged between reading and/or input means of the Input device and an interface of the input device by which the input device is connectable to the network computer, wherein the network computer comprises translation means having software means comprising a protocol translator, preferably a translating proxy, and by which the data transmitted from the input device, preferably via a USB interface, are translatable preferably into a TCP/IP protocol, wherein the method comprises the steps of;
- handing over data of the reading and/or input means of the input device to the encryption means of the input device;
- encrypting the data by the means of the input device;
- transmitting the data to the network computer;
- translating the data into a network protocol by the translation means of the network computer;
- decrypting the encrypted data by decryption means of the remote network station, wherein the method is an authentication method, **characterised in that** the data transmission between the input device and the remote network station is bidirectional, with the encryption means of the input device being encryption and decryption means and the decryption means of the remote network station being encryption and decryption means.

2. Method according to claim 1, **characterised in that** the input device comprises a keyboard having a plurality of input areas, wherein only the data of one or of a portion of the input areas may be encrypted by the encryption means of the input device.

3. Method according to claim 2, **characterised in that** one of the input areas comprises an alphanumeric input area and another of the input areas comprises a numerical input area, wherein preferably only the data of the numerical input area may be encrypted

4. Method according to at least one of claims 1 - 3, **characterised in that** the encryption of the data by the encryption means may be activated and deactivated.

5. Method according to at least one of claims 1 - 4, **characterised in that** the input device, preferably the keyboard, comprises signalling means, preferably lighting means, for signalling a secure connection between remote network station and network computer and between network computer and input device and/or the activation of the encryption means.

6. Method according to at least one of claims 1 - 5, **characterised in that** the method comprises at least one authentication step, preferably for authentication of the remote network station.

7. Method according to claim 6, **characterised in that** at least one authentication step comprises the authentication of a digital certificate.

8. Method according to at least one of claims 6 or 7, **characterised in that** at least one authentication step is performed by authentication means of the input device, preferably of the keyboard.

9. Method according to claim 8, **characterised in that** the authentication comprises a comparison of a digital certificate received from the remote network station with at least one digital certificate, preferably root certificate, stored in the input device, preferably keyboard.

10. Method according to at least one of claims 6 - 9, **characterised in that** the encryption means may be activated after establishing a secure connection between remote network station and network computer and authentication of the remote network station.

11. Method according to at least one of claims 1 - 11, **characterised in that** the method comprises a method of encrypting data on the network computer and/or on the remote network station.

12. Method according to at least one of claims 1 - 11, **characterised in that** the input device comprises an authentication device, particularly a card terminal and/or RFID reader (reader for radio frequency identification tags or transponder) and/or biometric reader and/or OCR reader and/or barcode reader and/or magnetic stripe card reader and/or a keyboard.

13. Method according to at least one of claims 1 - 12, **characterised in that** the translation means of the network computer comprises a device driver, preferable with middleware.

14. system for executing a method according to one of the preceding claims, **characterised in that** the system comprises an input device connectable to a network computer, the network computer and a remote network station connectable to the network computer via a data network, wherein the input device comprises encryption means arranged between reading and/or input means of the input device and an interface of the input device by which the input device is connectable to the network computer, wherein data of the reading and/or input means may be handed over to the encryption means, the data may be encrypted by the encryption means and the encrypted data may be transmitted to the network computer, wherein the network computer comprises translation means having software means taking over the encrypted data of the input device, translating this data into a network protocol and transmitting this data to the remote network station via a connection, the software means comprising a protocol translator, preferably a translating proxy, wherein the data transmission between the input device and the remote network station is bidirectional, with the encryption means of the input device being encryption and decryption means and the decryption means of the remote network station being encryption and decryption means.

## Revendications

1. Procédé destiné à assurer un transfert de données fiable entre un périphérique de saisie connecté à un ordinateur de réseau et un poste distant dans le réseau, lequel est connecté à l'ordinateur de réseau via un réseau de données, le périphérique de saisie comportant un système de codago, lequel est placé entre un système de lecture et/ou de saisie du périphérique de saisie et une interface du périphérique de saisie, via laquelle le périphérique de saisie peut être connecté à l'ordinateur de réseau, l'ordinateur de réseau comportant un système de conversion avec un outil logiciel qui comporte un convertisseur de protocole, de préférence un Translating Proxy et par lequel les données transférées par le périphérique de saisie, de préférence via une interface USB sont convertibles dans un protocole de réseau, de préférence dans un protocole TCP/IP, le procédé comportant les étapes suivantes :
- de la remise de données du système de lecture et/ou de saisie du périphérique de saisie au système de codage du périphérique de saisie ;
- du codage des données par le système de codage du périphérique de saisie ;
- du transfert des données codées à l'ordinateur de réseau ;
- de la conversion des données codées dans un protocole de réseau par le système de conversion de l'ordinateur de réseau ;
- du transfert des données codées au poste distant dans le réseau ;
- du décodage des données codées par un système de décodage du poste distant dans le réseau, le procédé étant un procédé d'authentification, **caractérisé en ce que** le transfert de données entre le périphérique de saisie et le poste distant dans le réseau est bidirectionnel, le système de codage du périphérique de saisie étant un système de codage et de décodage et le système de décodage du poste distant dans le réseau étant un système de codage et de décodage.

2. Procédé selon la revendication 1, **caractérisé en ce que** le périphérique de saisie comporte un clavier avec une pluralité de zones de saisie, seulement les données d'une ou d'une partie des zones de saisie pouvant être codées par le système de codage du périphérique de saisie.

3. Procédé selon la revendication 2, **caractérisé en ce que** l'une des zones de saisie comporte une zone de saisie alphanumérique et une autre des zones de saisie comporte une zone de saisie numérique, de préférence seules les données de la zone de saisie numérique pouvant être codées.

4. Procédé selon au moins l'une quelconque des revendications 1 à 3, **caractérisé en ce que** le codage des données est activable et désactivable par le système de codage.

5. Procédé selon au moins l'une quelconque des revendications 1 à 4, **caractérisé en ce que** le périphérique de saisie, de préférence le clavier comporte un système de signalisation, de préférence un système lumineux, pour la signalisation d'une connexion fiable entre le poste distant dans le réseau et l'ordinateur de réseau et entre l'ordinateur de réseau et le périphérique de saisie et/ou de l'activation du système de codage.

6. Procédé selon au moins l'une quelconque des revendications 1 à 5, **caractérisé en ce que** le procédé contient au moins une étape d'authentification de préférence pour l'authentification du poste distant dans le réseau.

7. Procédé selon la revendication 6, **caractérisé en ce qu'**au moins une étape d'authentification contient l'authentification d'un certificat numérique.

8. Procédé selon au moins l'une quelconque des revendications 6 ou 7, **caractérisé en ce qu'**au moins une étape d'authentification est réalisée par un système d'authentification du périphérique de saisie, de préférence par le clavier.

9. Procédé selon la revendications 8, **caractérisé en ce que** l'authentification contient une comparaison d'un certificat numérique réceptionné par le poste distant dans le réseau et au moins un certificat numérique, de préférence un certificat racine sauvegardé dans le périphérique de saisie, de préférence le clavier.

10. Procédé selon au moins l'une quelconque des revendications 6 à 9, **caractérisé en ce qu'**après l'établissement d'une connexion fiable entre le poste distant dans le réseau et l'ordinateur de résesu et l'authentification du poste distant dans le réseau, le système de codage est activable.

11. Procédé selon au moins l'une quelconque des revendications 1 à 11, **caractérisé en ce que** le procédé comporte un procédé de codage de données sur l'ordinateur de réseau et/ou sur le poste distant dans le réseau.

12. Procédé selon au moins l'une quelconque des revendications 1 à 11, **caractérisé en ce que** le périphérique de saisie comporte un instrument d'authentification, notamment un terminal de cartes et/ou un lecteur RFID (lecteur pour Radio Frequency Identification Tags ou transpondeur) et/ou un lecteur biométrique et/ou un lecteur OCR et/ou un lecteur de codes barres et/ou un lecteur de cartes à piste magnétique et/ou un clavier.

13. Procédé selon au moins l'une quelconque des revendications 1 à 12, **caractérisé en ce que** le système de conversion de l'ordinateur de réseau comporte un pilote de périphérique, de préférence avec un intergiciel.

14. Système destiné à réaliser un procédé selon l'une quelconque des revendications précédentes, **caractérisé en ce que** le système comporte un périphérique de saisie, lequel peut être connecté à un ordinateur de réseau, l'ordinateur de réseau et un poste distant dans le réseau, lequel peut être connecté à l'ordinateur de réseau via un réseau de données, le périphérique de saisie comportant un système de codage, lequel est placé entre un système de lecture et/ou de saisie du périphérique de saisie et une interface du périphérique de saisie, via laquelle le périphérique de saisie peut être connecté à l'ordinateur de réseau, des données pouvant être transférées par le système de lecture et/ou de saisie au système de codage, les données pouvant être codées par le système de codage et les données codées pouvant être transférées à l'ordinateur de réseau, l'ordinateur de réseau comportant un système de conversion avec un outil logiciel destiné à reprendre des données codées du périphérique de saisie, à convertir lesdites données en un protocole de réseau et à transférer lesdites données vers un poste distant dans le réseau via une connexion, l'outil logiciel comportant un convertisseur de protocole, de préférence un Translating Proxy, le transfert de données entre le périphérique de saisie et le poste distant dans le réseau étant bidirectionnel, le système de codage du périphérique de saisie étant un système de codage et de décodage et le système de décodage du poste distant dans le réseau étant un système de codage et de décodage.
